# EUROPEAN PATENT APPLICATION

(11) **EP 3 783 964 A1**
(43) Date of publication of application: **24.02.2021**
(21) Application number: 19815382.7
(22) Date of filing: 04.01.2019
(51) Int. Cl.: H04W 48/18, H04W 48/20

(54) **COMMUNICATION METHOD AND APPARATUS**

(30) Priority: 06.06.2018 CN 201810575319; 31.10.2018 CN 201811289922
(71) Applicant: Huawei Technologies Co., Ltd., Longgang Shenzhen, Guangdong 518129 (CN)
(72) Inventor: JIN, Hui, Shenzhen, Guangdong 518129 (CN); WEI, Zhenrong, Shenzhen, Guangdong 518129 (CN); SHEN, Li, Shenzhen, Guangdong 518129 (CN); DOU, Fenghui, Shenzhen, Guangdong 518129 (CN)
(74) Representative: Epping - Hermann - Fischer
(86) International application number: PCT/CN2019/070495
(87) International publication number: WO 2019/233100

(57) **Abstract**

This application provides a communication method and an apparatus, to improve network search efficiency of a terminal device. The method includes: receiving, by a terminal device, parameter information of m PLMNs, where parameter information of each of the m PLMNs includes 5G parameter information, each piece of 5G parameter information includes first information, and the first information is used to indicate a fifth generation 5G mobile communications system networking architecture supported by each PLMN; and determining, by the terminal device based on the first information of each PLMN and a 5G networking architecture supported by the terminal device, 5G parameter information of n PLMNs that needs to be stored by the terminal device.

## Description

This application claims priority to Chinese Patent Application No. 201810575319.5, filed with the Chinese Patent Office on June 06, 2018, and entitled "METHOD FOR SAVING INFORMATION", and Chinese Patent Application No. 201811289922.3, filed with the Chinese Patent Office on October 31, 2018, and entitled "METHOD FOR SAVING INFORMATION", which are incorporated herein by reference in their entireties.

### TECHNICAL FIELD

This application relates to the communications field, and in particular, to a communication method and an apparatus.

### BACKGROUND

A terminal device first searches for a carrier network after being powered on, and after finding an available network, the terminal device camps on and registers with the network to enjoy a network service. The carrier network may be referred to as a public land mobile network (public land mobile network, PLMN).

Usually, parameter information of each PLMN, for example, frequency band (band) information, may be preconfigured on the terminal device before delivery, or may be sent to the terminal device through network-side dynamic updating. When the terminal device searches for a network after being powered on, the terminal device may first search for a historical frequency corresponding to the network on which the terminal device successfully camps. If the network cannot be found based on the historical frequency, for example, when the terminal device roams to another country or region, all frequency bands supported by the terminal device may be searched for. Searching for all the frequency bands supported by the terminal device is referred to as full-band search. When the terminal device performs the full-band search, the terminal device needs to perform a camping attempt and a registration attempt when finding any PLMN. If the terminal device fails to camp on or register with the network, the terminal device needs to continue to search for a PLMN until the terminal device successfully registers with the PLMN. Therefore, a time period of a network search is relatively long.

As a technology develops, more parameter information of the PLMN is introduced into a future fifth generation (5th generation, 5G) mobile communications system, resulting in a more complex network search process. Therefore, how to improve network search efficiency of the terminal device is a problem that needs to be urgently resolved in the industry.

### SUMMARY

This application provides a communication method and an apparatus, to improve network search efficiency of a terminal device.

According to a first aspect, a communication method is provided, including: receiving, by a terminal device, parameter information of m PLMNs, where parameter information of each of the m PLMNs includes 5G parameter information, each piece of 5G parameter information includes first information, and the first information is used to indicate a 5G networking architecture supported by the PLMN; and determining, by the terminal device based on the first information of each PLMN and a 5G networking architecture supported by the terminal device, 5G parameter information of n PLMNs that needs to be stored by the terminal device, where both m and n are integers, m is greater than or equal to 1, and m is greater than or equal to n.

In this embodiment of this application, parameter information, of all PLMNs, sent by a network device to the terminal device may include 5G parameter information of all the PLMNs (in some implementations, the parameter information, of all the PLMNs, sent by the network device to the terminal device includes the parameter information of the m PLMNs, and may further include parameter information of another PLMN; the parameter information of the another PLMN does not include corresponding 5G parameter information; and this application describes only storage of parameter information of a part of the PLMNs whose parameter information received by the terminal device includes the 5G parameter information). The 5G parameter information of all the PLMNs includes the first information that is used to indicate a 5G networking architecture supported by a corresponding PLMN, so that the terminal device determines, based on 5G networking architectures supported by all the PLMNs and the 5G networking architecture supported by the terminal device, 5G parameter information of several PLMNs that needs to be stored by the terminal device. The 5G parameter information is used for a network search. This improves network search efficiency of the terminal device and reduces redundant storage of the terminal device. When storing the parameter information of all the PLMNs based on the 5G networking architectures supported by all the PLMNs and the 5G networking architecture supported by the terminal device, the terminal device may optimize storage of the 5G parameter information in the parameter information of all the PLMNs (the terminal device also stores other parameter information (for example, 4G parameter information), in the parameter information of all the PLMNs, other than the 5G parameter information; a specific storage manner is not limited in this application; all the parameter information may be stored; and alternatively the parameter information may be selectively stored by using an optimized storage manner, of the 5G parameter information, provided in this application). Optimized storage may include whether to store the parameter information, and may further include specifically storing a part of or all of the 5G parameter information. In this way, the terminal device may selectively store 5G parameter information of each PLMN that matches the 5G networking architecture supported by the terminal device (for example, the terminal device may store only 5G parameter information of these PLMNs, and 5G parameter information (especially 5G frequency band information) of another PLMN does not need to be stored). This reduces redundant storage of unnecessary 5G parameter information, avoids an unnecessary network search for a 5G frequency band corresponding to the unnecessary 5G parameter information, improves 5G network search efficiency of the terminal device, and increases a speed at which the terminal device accesses a 5G network. In some embodiments, each piece of 5G parameter information further includes 5G frequency band information, and the 5G frequency band information indicates a frequency band used in the 5G networking architecture supported by the PLMN

With reference to the first aspect, in a possible implementation, that the terminal device stores 5G parameter information of the first PLMN includes: storing, by the terminal device, the 5G parameter information of the first PLMN into a modem of the terminal device.

With reference to the first aspect, in a possible implementation, the determining, by the terminal device based on the first information and a 5G networking architecture supported by the terminal device, 5G parameter information of n PLMNs that needs to be stored by the terminal device includes: when there is an intersection between a 5G networking architecture supported by the first PLMN and the 5G networking architecture supported by the terminal device, storing, by the terminal device, the 5G parameter information of the first PLMN. Further, the 5G parameter information, of the first PLMN, stored by the terminal device includes second information. The second information is used to indicate the 5G networking architecture supported by the first PLMN, and the 5G networking architecture that is supported by the first PLMN and that is indicated by the second information includes only the intersection between the 5G networking architecture supported by the first PLMN and the 5G networking architecture supported by the terminal device. Further, the 5G parameter information, of the first PLMN, stored by the terminal device includes third information, and the third information is used to indicate 5G frequency band information corresponding to the second information.

In this embodiment of this application, the terminal device stores only the 5G parameter information of the first PLMN supporting the 5G networking architecture that has the intersection with the 5G networking architecture supported by the terminal device, and skips storing 5G parameter information of another PLMN (in other words, the terminal device skips storing 5G parameter information of those PLMNs each supporting a 5G networking architecture that does not have an intersection (or referred to as "does not match") with the 5G networking architecture supported by the terminal device). This improves the network search efficiency of the terminal device and saves the redundant storage of the terminal device. Further, when there is the intersection between the 5G networking architecture supported by the first PLMN and the 5G networking architecture supported by the terminal device, the terminal device stores the 5G parameter information of the first PLMN, and the stored 5G parameter information of the first PLMN includes the second information and the third information. The second information is used to indicate the 5G networking architecture supported by the first PLMN, and the 5G networking architecture that is supported by the first PLMN and that is indicated by the second information includes only the intersection between the 5G networking architecture supported by the first PLMN and the 5G networking architecture supported by the terminal device. The third information is used to indicate the 5G frequency band information corresponding to the second information. To be specific, the terminal device skips storing 5G frequency band information corresponding to a 5G networking architecture that is in 5G networking architectures supported by the first PLMN and that does not have an intersection with the 5G networking architecture supported by the terminal device. In addition, the terminal device may not search for 5G frequency bands corresponding to these 5G networking architectures during the network search. This further improves the network search efficiency of the terminal device and saves the redundant storage of the terminal device.

With reference to the first aspect, in a possible implementation, the determining, by the terminal device based on the first information of each PLMN and a 5G networking architecture supported by the terminal device, 5G parameter information of n PLMNs that needs to be stored by the terminal device includes: determining, by the terminal device based on the first information of a second PLMN, that there is no intersection between a 5G networking architecture supported by the second PLMN and the 5G networking architecture supported by the terminal device; and skipping storing, by the terminal device, 5G parameter information of the second PLMN

In this embodiment of this application, when determining that there is no intersection between the 5G networking architecture supported by the terminal device and the 5G networking architecture supported by the second PLMN, the terminal device skips storing the 5G parameter information of the second PLMN. This improves the network search efficiency and saves the redundant storage.

With reference to the first aspect, in a possible implementation, the 5G networking architecture supported by the PLMN is implicitly indicated by using a radio access technology RAT field.

In this embodiment of this application, some parameter values newly added to an existing RAT field may be used to implicitly indicate the 5G networking architecture supported by the PLMN. This reuses an existing parameter field to reduce signaling overheads.

With reference to the first aspect, in a possible implementation, when the terminal device is in a roaming state, the method further includes: determining, by the terminal device based on the stored 5G parameter information of the n PLMNs, one or more third PLMNs from PLMNs in a country or a region in which the terminal device is currently located, where there is an intersection between a 5G networking architecture supported by each third PLMN and the 5G networking architecture supported by the terminal device; and when there is a campable PLMN in the third PLMNs, attempting, by the terminal device, to camp on the campable PLMN

In this embodiment of this application, when the terminal device is in the roaming state, the terminal device may select a third PLMN (there may be one or more third PLMNs) supporting a 5G networking architecture that has an intersection with the 5G networking architecture supported by the terminal device, to attempt to camp on the third PLMN. In this way, the terminal device may camp on the 5G network as soon as possible, to improve the network search efficiency.

With reference to the first aspect, in a possible implementation, the method further includes: when none of the one or more third PLMNs are campable, camping, by the terminal device, on another PLMN other than the one or more third PLMNs based on a configuration of a fourth generation 4G mobile communications system.

With reference to the first aspect, in a possible implementation, the terminal device is in the roaming state, and the method further includes: determining, by the terminal device based on the stored 5G parameter information of the PLMN, that there is no intersection between 5G networking architectures supported by all PLMNs (there may be one or more PLMNs) in the country or the region in which the terminal device is currently located and the 5G networking architecture supported by the terminal device; and disabling, by the terminal device, a 5G function of the terminal device.

In this embodiment of this application, when the terminal device is in the roaming state, if there is no intersection between the 5G networking architecture supported by the terminal device and the 5G networking architectures supported by all the PLMNs in the country or the region in which the terminal device is currently located, the terminal device may disable the 5G function, to save an unnecessary 5G network search and improve the network search efficiency.

With reference to the first aspect, in a possible implementation, the method further includes: when one PLMN and the terminal device jointly support at least two 5G networking architectures, determining, by the terminal device according to a carrier policy and/or a local policy, a 5G networking architecture on which the terminal device preferably attempts to camp.

With reference to the first aspect, in a possible implementation, the receiving, by a terminal device, parameter information of m PLMNs includes: receiving, by an application processor AP of the terminal device, the parameter information of the m PLMNs; and the determining, by the terminal device based on the first information of each PLMN and a 5G networking architecture supported by the terminal device, 5G parameter information of n PLMNs that needs to be stored by the terminal device includes: sending, by the AP, the parameter information of the m PLMNs to a radio interface layer RIL of the terminal device; determining, by the RIL based on the first information included in the parameter information of the m PLMNs and the 5G networking architecture supported by the terminal device, the 5G parameter information of the n PLMNs that needs to be stored by the terminal device; and sending, by the RIL, the 5G parameter information of the n PLMNs to the modem of the terminal device.

With reference to the first aspect, in a possible implementation, the receiving, by a terminal device, parameter information of m PLMNs includes: receiving, by the application processor AP of the terminal device, the parameter information of the m PLMNs; and the determining, by the terminal device based on the first information of each PLMN and a 5G networking architecture supported by the terminal device, 5G parameter information of n PLMNs that needs to be stored by the terminal device includes: sending, by the AP, the parameter information of the m PLMNs to the modem of the terminal device; and determining, by the modem based on the first information included in the parameter information of the m PLMNs and the 5G networking architecture supported by the terminal device, the 5G parameter information of the n PLMNs that needs to be stored by the terminal device.

According to a second aspect, a communication method is provided, including: receiving, by a network device, a request message sent by a terminal device, where the request message is used to request to obtain parameter information of one or more PLMNs; and sending, by the network device, the parameter information of the one or more PLMNs to the terminal device, where parameter information of each PLMN includes 5G parameter information, each piece of 5G parameter information includes first information, and the first information is used to indicate a 5G networking architecture supported by the PLMN

According to a third aspect, a communication method is provided, including: receiving, by a network device, fourth information sent by a terminal device, where the fourth information is used to indicate a 5G networking architecture supported by the terminal device; and sending, by the network device, parameter information of m PLMNs to the terminal device, where parameter information of each of n of the m PLMNs includes 5G parameter information, 5G parameter information in parameter information of the n PLMNs is determined based on the fourth information and a 5G networking architecture supported by each of the n PLMNs, both m and n are integers, m is greater than or equal to 1, and m is greater than or equal to n.

In this embodiment of this application, the network device may obtain information about the 5G networking architecture supported by the terminal device. The network device determines, based on the information about the 5G networking architecture supported by the terminal device and information about that supported by each PLMN, parameter information, of each PLMN, pushed to the terminal device (specifically, 5G parameter information in the pushed parameter information of each PLMN may be optimized; and optimization includes whether to push the parameter information, and may further include pushing a part of or all of the 5G parameter information), so that the terminal device performs a network search by using the parameter information. This reduces redundant storage of the terminal device and improves network search efficiency.

With reference to the third aspect, in a possible implementation, the method further includes: when there is an intersection between a 5G networking architecture supported by a first PLMN and the 5G networking architecture supported by the terminal device, parameter information, of the first PLMN, sent by the network device to the terminal device includes a part of or all of 5G parameter information of the first PLMN

The some 5G parameter information may include only 5G frequency band information corresponding to these intersections (there may be one or more intersections), and may further include information used to indicate these intersections.

With reference to the third aspect, in a possible implementation, the method further includes: when the network device determines that there is no intersection between a 5G networking architecture supported by a second PLMN and the 5G networking architecture supported by the terminal device, parameter information, of the second PLMN, sent by the network device to the terminal device does not include 5G parameter information of the second PLMN

According to a fourth aspect, an apparatus is provided. The apparatus is a terminal device and has a function of implementing the method in the first aspect. These functions may be implemented by hardware, or may be implemented by hardware executing corresponding software. The hardware or software includes one or more units corresponding to the foregoing function.

According to a fifth aspect, an apparatus is provided. The apparatus is a network device and has a function of implementing the method in the second aspect or the third aspect. These functions may be implemented by hardware, or may be implemented by hardware executing corresponding software. The hardware or software includes one or more units corresponding to the foregoing function.

According to a sixth aspect, an apparatus is provided. The apparatus is a terminal device. The apparatus includes a memory, a communications interface, and a processor. The memory is configured to store a computer program or an instruction. The processor is coupled to the memory and the communications interface. When the processor executes the computer program or the instruction, the apparatus performs the method in the first aspect.

According to a seventh aspect, an apparatus is provided. The apparatus is a network device. The apparatus includes a memory, a communications interface, and a processor. The memory is configured to store a computer program or an instruction. The processor is coupled to the memory and the communications interface. When the processor executes the computer program or the instruction, the apparatus performs the method in the second aspect or the third aspect.

According to an eighth aspect, an apparatus is provided. The apparatus is a terminal device, and includes an application processor (application processor, AP), a radio interface layer (radio interface layer, RIL), a modem, and a transceiver. The AP is configured to receive parameter information of m PLMNs by using the transceiver. Parameter information of each of the m PLMNs includes 5G parameter information, each piece of 5G parameter information includes first information, and the first information is used to indicate a fifth generation 5G mobile communications system networking architecture supported by each PLMN. The AP is further configured to send the parameter information of the m PLMNs to the RIL. The RIL is configured to: determine, based on the first information in the parameter information of the m PLMNs and a 5G networking architecture supported by the terminal device, 5G parameter information of n PLMNs that needs to be stored by the terminal device, where both m and n are integers, m is greater than or equal to 1, and m is greater than or equal to n. The RIL sends parameter information of the n PLMNs to the modem. The modem is configured to store the parameter information of the n PLMNs.

With reference to the eighth aspect, in a possible implementation, the RIL is specifically configured to: when there is an intersection between a 5G networking architecture supported by a first PLMN and the 5G networking architecture supported by the terminal device, determine to store 5G parameter information of the first PLMN

With reference to the eighth aspect, in a possible implementation, the RIL is specifically configured to send the 5G parameter information of the first PLMN to the modem, and the modem is specifically configured to store the 5G parameter information of the first PLMN

With reference to the eighth aspect, in a possible implementation, the 5G parameter information of the first PLMN includes second information. The second information is used to indicate the 5G networking architecture supported by the first PLMN, and the 5G networking architecture that is supported by the first PLMN and that is indicated by the second information includes only the intersection between the 5G networking architecture supported by the first PLMN and the 5G networking architecture supported by the terminal device.

With reference to the eighth aspect, in a possible implementation, the 5G parameter information of the first PLMN includes third information, and the third information is used to indicate 5G frequency band information corresponding to the second information.

With reference to the eighth aspect, in a possible implementation, the RIL is specifically configured to: determine, based on the first information of a second PLMN, that there is no intersection between a 5G networking architecture supported by the second PLMN and the 5G networking architecture supported by the terminal device; and determine to skip storing 5G parameter information of the second PLMN

According to a ninth aspect, an apparatus is provided. The apparatus is a terminal device, and includes an AP, a modem, and a transceiver.

The AP is configured to receive parameter information of m public land mobile networks PLMNs by using the transceiver. Parameter information of each of the m PLMNs includes 5G parameter information, each piece of 5G parameter information includes first information, and the first information is used to indicate a fifth generation 5G mobile communications system networking architecture supported by each PLMN. The AP is further configured to send the parameter information of the m PLMNs to the modem. The modem is configured to: determine, based on the first information in the parameter information of the m PLMNs and a 5G networking architecture supported by the terminal device, 5G parameter information of n PLMNs that needs to be stored by the terminal device, where both m and n are integers, m is greater than or equal to 1, and m is greater than or equal to n. The modem is configured to store parameter information of the n PLMNs.

With reference to the ninth aspect, in a possible implementation, the modem is specifically configured to: when there is an intersection between a 5G networking architecture supported by a first PLMN and the 5G networking architecture supported by the terminal device, determine to store 5G parameter information of the first PLMN

With reference to the ninth aspect, in a possible implementation, the modem specifically stores the 5G parameter information of the first PLMN

With reference to the ninth aspect, in a possible implementation, the 5G parameter information of the first PLMN includes second information. The second information is used to indicate the 5G networking architecture supported by the first PLMN, and the 5G networking architecture that is supported by the first PLMN and that is indicated by the second information includes only the intersection between the 5G networking architecture supported by the first PLMN and the 5G networking architecture supported by the terminal device.

With reference to the ninth aspect, in a possible implementation, the 5G parameter information of the first PLMN includes third information, and the third information is used to indicate 5G frequency band information corresponding to the second information.

With reference to the ninth aspect, in a possible implementation, the modem is specifically configured to: determine, based on the first information of a second PLMN, that there is no intersection between a 5G networking architecture supported by the second PLMN and the 5G networking architecture supported by the terminal device; and determine to skip storing 5G parameter information of the second PLMN

According to a tenth aspect, a computer program product is provided. The computer program product includes computer program code, and when the computer program code is run on a computer, the computer is enabled to perform the method in the first aspect.

According to an eleventh aspect, a computer program product is provided. The computer program product includes computer program code, and when the computer program code is run on a computer, the computer is enabled to perform the method in the second aspect or the third aspect.

According to a twelfth aspect, this application provides a chip system. The chip system includes a processor, configured to implement the method in the first aspect, for example, receive or process data and/or information in the method. In a possible design, the chip system further includes a memory. The memory is configured to store a program instruction and/or data. The chip system may include a chip, or may include a chip and another discrete component.

According to a thirteenth aspect, this application provides a chip system. The chip system includes a processor, configured to implement the method in the second aspect or the third aspect, for example, receive or process data and/or information in the method. In a possible design, the chip system further includes a memory. The memory is configured to store a program instruction and/or data. The chip system may include a chip, or may include a chip and another discrete component.

According to a fourteenth aspect, this application provides a computer-readable storage medium. The computer-readable storage medium stores a computer program, and when the computer program is run, the method in the first aspect is implemented.

According to a fifteenth aspect, this application provides a computer-readable storage medium. The computer-readable storage medium stores a computer program, and when the computer program is run, the method in the second aspect or the third aspect is implemented.

### BRIEF DESCRIPTION OF DRAWINGS

FIG. 1 is a schematic diagram of an application scenario according to an embodiment of this application;
FIG. 2 is a flowchart of a method for obtaining parameter information of a PLMN according to an embodiment of this application;
FIG. 3 is a schematic flowchart of a communication method according to an embodiment of this application;
FIG. 4 is a schematic structural diagram of a terminal device according to an embodiment of this application;
FIG. 5 is a flowchart of a communication method according to another embodiment of this application;
FIG. 6 is a flowchart of a communication method according to another embodiment of this application;
FIG. 7 is a flowchart of a communication method according to another embodiment of this application;
FIG. 8 is a flowchart of a communication method according to another embodiment of this application;
FIG. 9 is a schematic structural diagram of a terminal device according to another embodiment of this application;
FIG. 10 is a schematic structural diagram of a network device according to an embodiment of this application;
FIG. 11 is a schematic structural diagram of a terminal device according to another embodiment of this application; and
FIG. 12 is a schematic structural diagram of a network device according to another embodiment of this application.

### DESCRIPTION OF EMBODIMENTS

The following describes technical solutions of this application with reference to the accompanying drawings.

The technical solutions in the embodiments of this application may be applied to various communications systems, for example, a long term evolution (long term evolution, LTE) system, an LTE frequency division duplex (frequency division duplex, FDD) system, an LTE time division duplex (time division duplex, TDD) system, a universal mobile communications system (universal mobile telecommunication system, UMTS), a worldwide interoperability for microwave access (worldwide interoperability for microwave access, WiMAX) communications system, a future fifth generation (5th generation, 5G) system, or a new radio (new radio, NR) system.

A terminal device in the embodiments of this application may be a user device, an access terminal, a subscriber unit, a subscriber station, a mobile station, a mobile station, a remote station, a remote terminal, a mobile device, a user terminal, a terminal, a wireless communications device, a user agent, a user apparatus, or the like. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a hand-held device having a wireless communication function, a computing device, another processing device connected to a wireless modem, a vehicle-mounted device, a wearable device, a terminal device in a future 5G network, a terminal device in a future evolved public land mobile communications network (public land mobile network, PLMN), or the like. This is not limited in the embodiments of this application.

An access network device in the embodiments of this application may be a device configured to communicate with the terminal device. The access network device may be an evolved NodeB (evolved NodeB, eNB, or eNodeB) in an LTE system, or may be a radio controller in a cloud radio access network (cloud radio access network, CRAN) scenario. Alternatively, the access network device may be a relay station, an access point, a vehicle-mounted device, a wearable device, or an access network device in the future 5G network, for example, an access network device in a new radio (new radio, NR) technology, or an access network device in the future evolved PLMN network. This is not limited in the embodiments of this application.

A network device in the embodiments of this application may be a network side device that communicates with the terminal device by using a network. For example, the network device may include a server, and the server may be a device configured to provide a computing service. The server may be, for example, a cloud server. The server may be connected to the terminal device by using the network, and serves the terminal device. Depending on different service types, the server may be a file server, a database server, an application server, or the like.

In the embodiments of this application, the terminal device, the access network device, or the server includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing by using a process (process), for example, a Linux operating system, a UNIX operating system, an Android operating system, an iOS operating system, or a Windows operating system. The application layer includes applications such as a browser, an address book, word processing software, and instant messaging software. In addition, a specific structure of an entity for executing a method provided in the embodiments of this application is not specifically limited in the embodiments of this application, provided that a program that records code of the method provided in the embodiments of this application can be run to perform communication according to the method provided in the embodiments of this application. For example, the method provided in the embodiments of this application may be performed by the terminal device or the network device, or a function module, of the terminal device or the network device, which can invoke and execute the program.

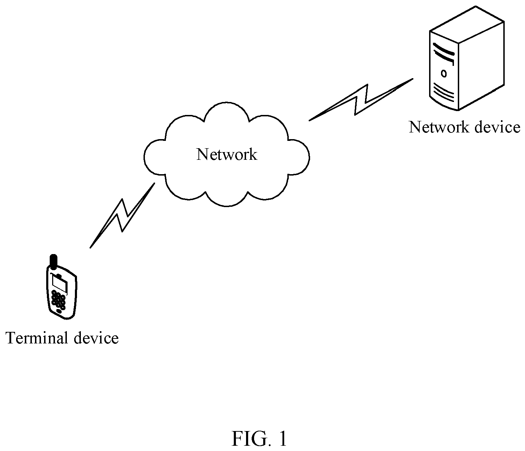

FIG. 1 is a schematic diagram of an application scenario according to an embodiment of this application. As shown in FIG. 1, the terminal device may communicate with a network device by using a network. The network may include, for example, an access network, a core network, another network element, or a gateway device. The network device may be a server. The server may be a cloud server, or may be a server of another type. This is not limited in this embodiment of this application.

As described above, the terminal device may obtain parameter information of a PLMN in two manners. In one manner, the parameter information is preconfigured on the terminal device when before delivery. However, the parameter information, of the PLMN, obtained in this manner is fixed and cannot be updated. In the other manner, the parameter information of the PLMN is sent to the terminal device through network-side dynamic updating. For example, the network device may send the parameter information of the PLMN to the terminal device.

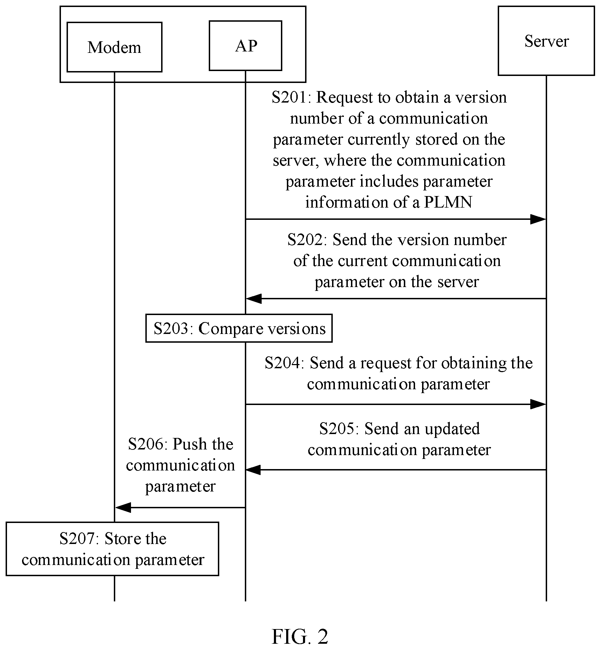

FIG. 2 is a flowchart of a method for obtaining parameter information of a PLMN according to an embodiment of this application. The method includes the following steps.

S201: A terminal device sends a first request message to a server, and correspondingly the server receives the first request message, where the first request message is used to request to obtain a version number of a communication parameter currently stored on the server, and the communication parameter includes the parameter information of the PLMN

In some implementations, the communication parameter may further include other information, for example, information such as an access point name (access point name, APN).

S202: The terminal device receives the version number of the current communication parameter from the server, and correspondingly the server sends the version number of the current communication parameter information.

S203: The terminal device compares a version number of a communication parameter stored on the terminal device with the version number of the communication parameter stored on the server.

S204: When the terminal device determines that the version number of the communication parameter stored on the server is greater than the version number of the communication parameter stored on the terminal device, the terminal device sends a second request message to the server, and correspondingly the server receives the second request message, where the second request message is used to request to obtain a communication parameter of an updated version.

S205: The server sends the communication parameter of the updated version to the terminal device, and correspondingly the terminal device receives the communication parameter of the updated version.

In some implementations, an application processor (application processor, AP) of the terminal device may perform the steps S201 to S205.

S206: The AP of the terminal device pushes the communication parameter of the updated version to a modem (modem) of the terminal device.

S207: The modem of the terminal device stores the communication parameter of the updated version, where the communication parameter includes the parameter information of the PLMN

The modem may perform a network search based on the stored parameter information of the PLMN

It can be learned from FIG. 2 that, a communication parameter, including a parameter of the PLMN, pushed by the server to each terminal device is the same, and the communication parameter is not distinguished based on a capability of the terminal device. However, as a communications technology is upgraded, there is more parameter information of the PLMN. Therefore, the terminal device consumes more time and more resources to perform a network search. This affects network search efficiency. For example, as a 5G technology develops, the parameter information of the PLMN also carries 5G parameter information. However, the terminal device has different capabilities of supporting 5G. Therefore, the terminal device may store unnecessary 5G parameter information of the PLMN, resulting in a storage resource waste and affecting the network search efficiency.

As the 5G technology develops, an available 5G networking architecture includes but is not limited to the following types:
First architecture: The terminal device may access a 4G core network by using a 4G access network device, and a 5G access network device is used in a dual connectivity (dual connectivity, DC) scenario to increase a communication rate.
Second architecture: The terminal device accesses a 5G core network by using the 5G access network device. In some implementations, the 4G access network device may be used in the dual connectivity scenario to increase the communication rate.
Third architecture: The terminal device accesses the 5G core network by using the 4G access network device. In some implementations, the 5G access network device may be used in the dual connectivity scenario to increase the communication rate.

In some implementations, the 4G access network device may be a base station in an LTE system, for example, an evolved NodeB (which is referred to as an eNB or an eNodeB). The 5G access network device may be a base station in 5G, for example, an NR base station.

In some implementations, a function of the terminal device that supports the first architecture may include but is not limited to at least one of the following: reading an upper layer indication-r15 field in a system information block 2 (system information blocks 2, SIB 2), and displaying a 5G icon for a user, where the upper layer indication-r15 field is used to notify the terminal device that a current PLMN supports the first architecture; reporting, at a non-access stratum (non-access stratum, NAS) layer, that the first architecture is supported; reporting, in a radio capability, that the first architecture is supported; using the PLMN that supports the first architecture as a high priority PLMN, and if the terminal device camps on a PLMN that does not support the first architecture, periodically searching, by the terminal device, for the PLMN that supports the first architecture; and enabling, by the terminal device, NR radio frequency, and searching for an NR frequency based on a network configuration.

In some implementations, a function of the terminal device that supports the second architecture may include but is not limited to at least one of the following: when the terminal device is in 4G, providing, to the 4G core network, an indication indicating that the terminal device supports 5G; when a packet data network (packet data network gateway, PDN) connection is established in 4G, allocating a PDU session (session) identifier (identifier, ID) and sending the PDU session identifier to a network by using a protocol configuration option (protocol configuration options, PCO); receiving single network slice selection assistance information (single network slice selection assistance information, S-NSSAI) sent by the network; determining whether an evolved packet system (evolved packet system, EPS) bearer (bearer) supports interworking (interworking); and enabling the NR radio frequency to perform a search. That the EPS bearer supports the interworking means that the EPS bearer may be moved (move) or transferred (transfer) from a 4G network to a 5G network when an internet protocol (internet protocol, IP) address is not changed.

In some implementations, a function of the terminal device that supports the third architecture may include but is not limited to at least one of the following: when the terminal device is in 4G, providing, to the 4G core network, the indication indicating that the terminal device supports 5G; when the packet data network (packet data network gateway, PDN) connection is established in 4G, allocating the PDU session (session) identifier (identifier, ID) and sending the PDU session identifier to the network by using the PCO (Protocol Configuration Options, protocol configuration option); receiving the single network slice selection assistance information (single network slice selection assistance information, S-NSSAI) sent by the network; and determining whether the EPS bearer (bearer) supports the interworking (interworking).

A terminal device that supports only the first architecture and the third architecture accesses the network by using the 4G access network device. Therefore, during a network search, 5G frequency band information is unnecessary information for the terminal device that does not support the second architecture. Storing the 5G frequency band information by the terminal device results in redundant storage, and the terminal device may search for an unwanted frequency band (band). As a result, a time period of the network search is increased.

In addition, the parameter information of the PLMN is usually used to indicate frequency band information, a radio access technology (radio access technologies, RAT), and the like, and does not indicate information about a 5G network architecture. Therefore, for a terminal device that supports different 5G network architectures, because the terminal device does not know a specific PLMN that supports the 5G networking architecture, the terminal device cannot quickly access the 5G network. Alternatively, when the terminal device roams to a country or a region in which 5G is not supported, because the parameter information of the PLMN does not indicate the information about the 5G networking architecture, the terminal device may continuously search for a 5G signal, causing a power consumption waste.

To resolve the foregoing problem, this application provides a solution in which information about a 5G networking architecture (or a 5G networking solution) supported by each PLMN is added to parameter information of the PLMN. Further, the terminal device may store the parameter information of the PLMN based on a 5G capability supported by the terminal device, and perform a network search based on the stored parameter information of the PLMN, to avoid storing redundant parameter information or save an unnecessary network search. This improves resource utilization and the network search efficiency.

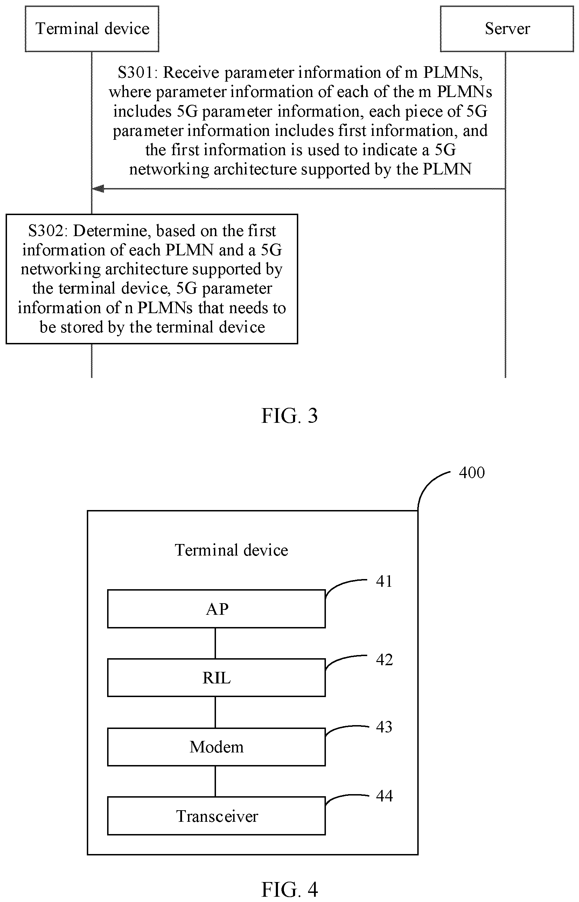

FIG. 3 is a schematic flowchart of a communication method according to an embodiment of this application. As shown in FIG. 3, the method may be performed by a terminal device and a network device, or may be performed by a module or a chip disposed in the terminal device or the network device. The network device may be a server, an access network device, an access point, or a base station. The method in FIG. 2 includes the following steps.

S301: The terminal device receives parameter information of m PLMNs, where parameter information of each of the m PLMNs includes 5G parameter information, each piece of 5G parameter information includes first information, the first information is used to indicate a 5G networking architecture supported by the PLMN, m is an integer, and m is greater than or equal to 1.

In some implementations, the parameter information of the PLMN may be included in a communication parameter. For example, the terminal device may receive the communication parameter. The communication parameter includes the parameter information of the PLMN. In some implementations, the communication parameter may further include other information, for example, information such as an access point name (access point name, APN).

The parameter information of the PLMN may include parameter information related to the PLMN, for example, a mobile country code (mobile country code, MCC) of the PLMN, a mobile network code (mobile network code, MNC), frequency band information supported by the PLMN, or information about a radio access technology (radio access technologies, RAT) supported by the PLMN. It should be understood that a same PLMN may support a plurality of types of frequency band information or a plurality of radio access technologies. For example, the same PLMN may support an enhanced LTE (enhanced LTE, eLTE) technology, an NR technology, a UMTS technology, and the like.

In some implementations, the terminal device may explicitly or implicitly indicate the 5G networking architecture supported by the PLMN

As an example instead of a limitation, in an explicit manner, a new field may be added to the parameter information of the PLMN to indicate the first information. For example, Table 1 shows parameter information of a PLMN (an MCC value corresponds to the PLMN is 123, and an MNC value corresponds to the PLMN is 01). Related parameters include an MCC parameter, an MNC parameter, an RAT parameter, and a 5G parameter (the 5G parameter may include a 5G networking architecture supported by the PLMN). "5G indication (5G indication)" may be used as the newly added field to indicate the 5G networking architecture supported by the PLMN

**Table 1**

| MCC | MNC | RAT | 5G indication | BAND |
|---|---|---|---|---|
| 123 | 01 | LTE | First architecture | band 1 |
| 123 | 01 | LTE | Second architecture | band 2 |
| 123 | 01 | UMTS | | band 3 |
| 123 | 01 | LTE | Third architecture | band 4 |

As an example instead of a limitation, in an implicit manner, different 5G networking architectures may correspond to different access network technologies. Therefore, as shown in Table 2, a new value (eLTE and EN-DC) may be added to an existing RAT (Radio Access Technologies, radio access technology) field (or referred to as an RAT parameter) to implicitly indicate the 5G networking architecture supported by the PLMN. For example, when a value of an RAT field included in parameter information of a PLMN is eLTE, it may be implicitly indicated that the PLMN supports the third architecture. When a value of an RAT field included in parameter information of a PLMN is enhanced DC (enhanced DC, EN-DC), it may be implicitly indicated that the PLMN supports the first architecture.

**Table 2**

| MCC | MNC | RAT | BAND |
|---|---|---|---|
| 123 | 01 | eLTE | band 1 |
| 123 | 01 | NR | band 2 |
| 123 | 01 | UMTS | band 3 |
| 123 | 01 | EN-DC | band 4 |

In some implementations, for the parameter information of the PLMN, another manner may alternatively be used to indicate the 5G networking architecture. The 5G networking architecture is not limited to the first architecture to the third architecture, and may be another type of 5G networking architecture.

S302: The terminal device determines, based on the first information of each PLMN and a 5G networking architecture supported by the terminal device, 5G parameter information of n PLMNs that needs to be stored by the terminal device, where n is an integer, and m is greater than or equal to n.

In some implementations, the terminal device may be configured to perform a network search based on the stored 5G parameter information of the n PLMNs. For example, the terminal device may store the 5G parameter information of the PLMN into a modem of the terminal device, and the modem may be configured to perform the network search based on the stored 5G parameter information of the PLMN

In this embodiment of this application, parameter information, of each PLMN, sent by the network device to the terminal device may include 5G parameter information of each PLMN. In some implementations, parameter information, of all PLMNs, sent by the network device to the terminal device includes the parameter information of the m PLMNs, and may further include parameter information of another PLMN. The parameter information of the another PLMN does not include corresponding 5G parameter information. This application describes only storage of parameter information of a part of the PLMNs whose parameter information received by the terminal device includes the 5G parameter information. The 5G parameter information of each PLMN includes the first information used to indicate a 5G networking architecture supported by a corresponding PLMN, so that the terminal device determines, based on a 5G networking architecture supported by each PLMN and the 5G networking architecture supported by the terminal device, 5G parameter information of several PLMNs that needs to be stored by the terminal device. The 5G parameter information is used for the network search. This improves network search efficiency of the terminal device and reduces redundant storage of the terminal device. When storing the parameter information of each PLMN, the terminal device may optimize storage of the 5G parameter information in the parameter information of each PLMN based on the 5G networking architecture supported by each PLMN and the 5G networking architecture supported by the terminal device. Optionally, the terminal device also stores other parameter information (for example, 4G parameter information), in the parameter information of all the PLMNs, other than the 5G parameter information. A specific storage manner is not limited in this application. All the parameter information may be stored. Alternatively, the parameter information may be selectively stored by using an optimized storage manner, of the 5G parameter information, provided in this application. Optimized storage may include whether to store the parameter information, and may further include specifically storing a part of or all of the 5G parameter information. In this way, the terminal device may selectively store 5G parameter information of each PLMN that matches the 5G networking architecture supported by the terminal device (for example, the terminal device may store only 5G parameter information of these PLMNs, and 5G parameter information (especially 5G frequency band information) of another PLMN does not need to be stored). This reduces redundant storage of unnecessary 5G parameter information, avoids an unnecessary network search for a 5G frequency band corresponding to the unnecessary 5G parameter information, improves 5G network search efficiency of the terminal device, and increases a speed at which the terminal device accesses a 5G network. In some embodiments, each piece of 5G parameter information further includes 5G frequency band information, and the 5G frequency band information indicates a frequency band used in the 5G networking architecture supported by the PLMN

In an example, when there is an intersection between a 5G networking architecture supported by a first PLMN and the 5G networking architecture supported by the terminal device, the terminal device stores 5G parameter information of the first PLMN. Further, the 5G parameter information, of the first PLMN, stored by the terminal device includes second information. The second information is used to indicate the 5G networking architecture supported by the first PLMN, and the 5G networking architecture that is supported by the first PLMN and that is indicated by the second information includes only the intersection between the 5G networking architecture supported by the first PLMN and the 5G networking architecture supported by the terminal device. Further, the 5G parameter information, of the first PLMN, stored by the terminal device includes third information, and the third information is used to indicate 5G frequency band information corresponding to the second information. The 5G parameter information may include a 5G solution indication corresponding to the first PLMN, for example, a 5G networking architecture and frequency band information corresponding to 5G. In other words, the terminal device may perform a 5G-related network search in a frequency band corresponding to the first PLMN. In some implementations, the first PLMN may be a specific carrier network, or may be any one of a plurality of carrier networks. If there are a plurality of first PLMNs, the terminal device may further select, from the plurality of first PLMNs according to a carrier policy and/or a local policy, a network on which the terminal device camps and with which the terminal device registers.

For the terminal device, only the 5G networking architecture supported by the first PLMN and the 5G networking architecture supported by the terminal device have the intersection. Therefore, for the terminal device, only the first PLMN supports 5G, and other PLMNs each do not support 5G. Therefore, the terminal device may store the 5G parameter information of the first PLMN, or may store 4G or earlier-generation parameter information of the first PLMN, or the like. For another PLMN other than the first PLMN, the terminal device may store only 4G or earlier-generation parameter information, and does not need to store 5G parameter information.

In this embodiment of this application, the terminal device stores only the 5G parameter information of the first PLMN supporting the 5G networking architecture that has the intersection with the 5G networking architecture supported by the terminal device, and skips storing the 5G parameter information of the another PLMN. In other words, the terminal device skips storing 5G parameter information of those PLMNs each supporting a 5G networking architecture that does not have an intersection (or referred to as "does not match") with the 5G networking architecture supported by the terminal device. This improves the network search efficiency of the terminal device and saves the redundant storage of the terminal device. Further, when there is the intersection between the 5G networking architecture supported by the first PLMN and the 5G networking architecture supported by the terminal device, the terminal device stores the 5G parameter information of the first PLMN, and the stored 5G parameter information of the first PLMN includes the second information and the third information. The second information is used to indicate the 5G networking architecture supported by the first PLMN, and the 5G networking architecture that is supported by the first PLMN and that is indicated by the second information includes only the intersection between the 5G networking architecture supported by the first PLMN and the 5G networking architecture supported by the terminal device. The third information is used to indicate the 5G frequency band information corresponding to the second information. To be specific, the terminal device skips storing 5G frequency band information corresponding to a 5G networking architecture that is in 5G networking architectures supported by the first PLMN and that does not have an intersection with the 5G networking architecture supported by the terminal device. In addition, the terminal device may not search for 5G frequency bands corresponding to these 5G networking architectures during the network search. This further improves the network search efficiency of the terminal device and saves the redundant storage of the terminal device.

In some implementations, if the terminal device determines, based on the first information, that there is no intersection between a 5G networking architecture supported by a second PLMN and the 5G networking architecture supported by the terminal device, the terminal device may determine to skip storing 5G parameter information of the second PLMN. In other words, the terminal device may not perform the 5G-related network search.

In this embodiment of this application, when determining that there is no intersection between the 5G networking architecture supported by the terminal device and the 5G networking architecture supported by the second PLMN, the terminal device skips storing the 5G parameter information of the second PLMN. This improves the network search efficiency and saves the redundant storage.

In some implementations, in some examples, when the terminal device is in a roaming state, the terminal device determines, based on the stored 5G parameter information of the n PLMNs, one or more third PLMNs from PLMNs in a country or a region in which the terminal device is currently located. There is an intersection between a 5G networking architecture supported by each third PLMN and the 5G networking architecture supported by the terminal device. When there is a campable PLMN in the third PLMNs, the terminal device attempts to camp on the campable PLMN

For example, when the terminal device is in the roaming state, the terminal device may determine an MCC of the current country or region, and then determine whether there is a PLMN, in a PLMN corresponding to the MCC, supporting a 5G networking architecture that has an intersection with the 5G networking architecture supported by the terminal device. If there is the PLMN, the terminal device may attempt to camp on and register with the PLMN In some implementations, at an early stage of 5G network deployment, not all LTE base stations in a same PLMN may support the 5G network. However, even if a base station currently found by the terminal device does not support the 5G networking architecture, because there is a 5G networking architecture jointly supported by the PLMN and the terminal device, the terminal device may still camp on the PLMN, and the terminal device may camp on a base station that supports 5G in a subsequent moving process.

In this embodiment of this application, when the terminal device is in the roaming state, the terminal device may select a third PLMN supporting a 5G networking architecture that has an intersection with the 5G networking architecture supported by the terminal device, to attempt to camp on the third PLMN. There may be one or more third PLMNs. In this way, the terminal device may camp on the 5G network as soon as possible, to improve the network search efficiency.

In some implementation, when none of the one or more third PLMNs are campable, the terminal device may camp on another PLMN other than the one or more third PLMNs based on a configuration of 4G. For example, the terminal device may perform a network search based on 4G parameter information, and camp on the another PLMN. In some implementations, after successfully camping on the another PLMN, the terminal device may continue to search for a PLMN supporting a 5G networking architecture that has an intersection with the 5G networking architecture supported by the terminal device, and attempt to camp on and register with the PLMN after finding the PLMN

In some implementations, if the terminal device is in the roaming state, and if the terminal device determines, based on the stored 5G parameter information of the PLMN, that there is no intersection between 5G networking architectures supported by all PLMNs (there may be one or more PLMNs) in the country or the region in which the terminal device is currently located and the 5G networking architecture supported by the terminal device, the terminal device may determine to disable a 5G function of the terminal device. In other words, for the terminal device, all current PLMNs do not support the 5G network. Therefore, the terminal device may disable the 5G function to reduce power consumption. Disabling the 5G function of the terminal device may include disabling a 5G function of the modem, so that the modem does not need to search for a 5G-related network.

In this embodiment of this application, when the terminal device is in the roaming state, if there is no intersection between the 5G networking architecture supported by the terminal device and the 5G networking architectures supported by all the PLMNs in the country or the region in which the terminal device is currently located, the terminal device may disable the 5G function, to save an unnecessary 5G network search and improve the network search efficiency.

In some implementations, when there are two or more 5G networking architectures jointly supported by the terminal device and the first PLMN, the terminal device may determine, according to the carrier policy and/or the local policy, a network, corresponding to a 5G networking architecture, on which the terminal device preferably camps. For example, as an example instead of a limitation, if both the terminal device and the first PLMN support the first architecture, the second architecture, and the third architecture, the terminal device may select the network in a priority sequence of the second architecture, the third architecture, and the first architecture. The first PLMN may be one carrier network, or may be a plurality of carrier networks.

It may be understood that, the terminal device may obtain the parameter information of the PLMN from the network device, and the parameter information of the PLMN may alternatively be configured on the terminal device when the terminal device is delivered from a factory. The parameter information of the PLMN may include the first information, namely, information indicating the 5G networking architecture supported by the PLMN. In this case, the parameter information, of the PLMN, stored in the modem may alternatively be determined based on a 5G networking architecture jointly supported by the terminal device and the PLMN

In some implementations, the steps in the method in FIG. 3 may be performed by different modules or units of the terminal device. The module or the unit may be a software module or a hardware module. For example, FIG. 4 is a schematic structural diagram of a terminal device 400 according to an embodiment of this application. The method in FIG. 3 may be performed by modules in FIG. 4. The terminal device 400 may include but is not limited to an application processor (application processor, AP) 41, a radio interface layer (radio interface layer, RIL) 42, and a modem 43. It may be understood that the terminal device may further include another software module or hardware module. Details are not described herein again. The AP 41 may be understood as an operating system layer, of the terminal device, which is configured for storage and running, for example, an Android (android) operating system. The modem 43 is configured for communication between the terminal device and a communications network. The RIL 42 may be understood as a bridge for communication between the AP 41 and the modem 43, and provides a wireless interface for the AP 41 to control the modem 43. The RIL 42 may be a software module, and may be integrated into the AP 41. Alternatively, the RIL 42 may be integrated into another module. The terminal device 400 in FIG. 4 may further include a transceiver 44. The transceiver 44 may receive and send a signal, and send the received signal to the modem 43. The modem 43 cannot directly identify information included in the signal. After demodulating the signal, the modem 43 sends data obtained after demodulation to the AP 41 by using the RIL 42, and the AP 41 parses the data to obtain information in the data. In this embodiment of this application, information exchange between the AP 41 and another device may be logically considered as interaction between the AP 41 and the another device. However, a person skilled in the art may understand that the AP 41 needs to perform signal exchange with the another device by using the RIL 42, the modem 43, and the transceiver 44.

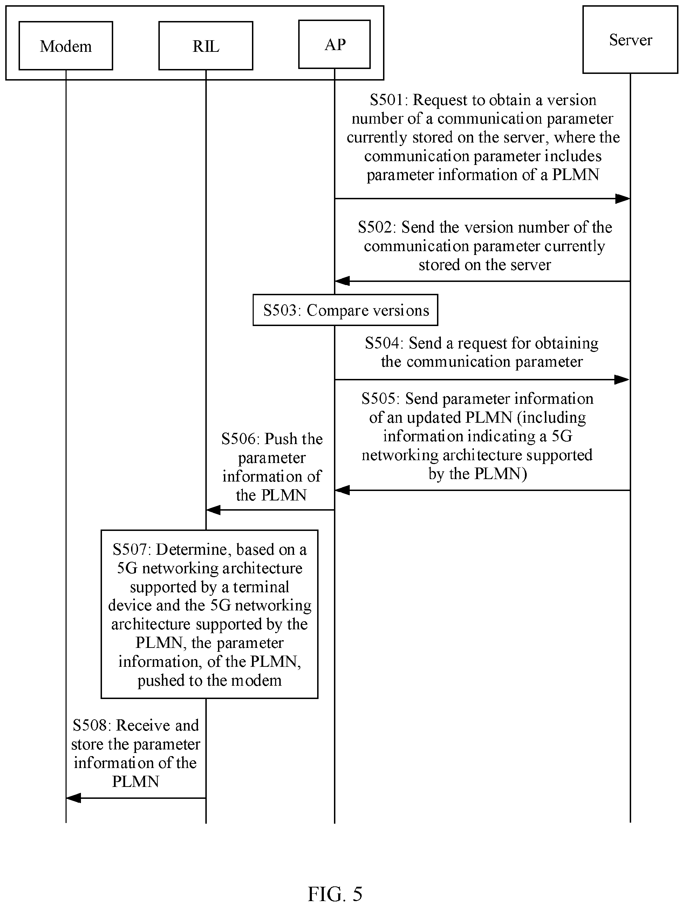

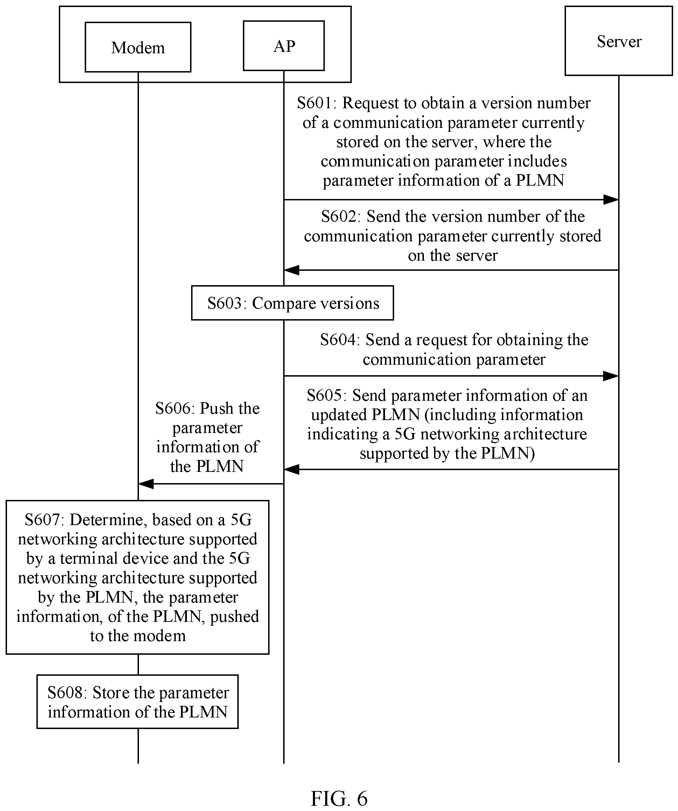

With reference to FIG. 5 and FIG. 6, the following may describe a process in detail in which a module of a terminal device performs the method in the embodiments of this application.

FIG. 5 is a flowchart of a communication method according to another embodiment of this application. In FIG. 5, an RIL module of a terminal device may be configured to: determine, based on a 5G networking architecture supported by the terminal device and a 5G networking architecture supported by a PLMN, parameter information, of the PLMN, stored by the terminal device; and push the parameter information of the PLMN to a modem. The modem may be configured to receive the parameter information of the PLMN from the RIL and locally store the parameter information of the PLMN, to perform a network search. In FIG. 5, an example in which a network device is a server is used for description. However, the server in FIG. 5 may also be replaced with an access point, an access network device, a base station, or another network device. The method in FIG. 5 includes the following steps.

S501: An AP sends a first request message to the server, and correspondingly the server receives the first request message, where the first request message is used to request to obtain a version number of a communication parameter currently stored on the server, and the communication parameter includes parameter information of a PLMN

It should be noted that, that the AP sends or receives information does not mean that the AP directly sends information to the server or directly receives information from the server. During sending, the information sent by the AP needs to pass through the RIL and the modem, and then the AP sends a signal by using a transceiver. During receiving, a signal is received by using the transceiver, and then arrives at the AP after the signal passes through the modem and the RIL. The AP parses the signal to obtain information.

S502: The AP receives the version number of the current communication parameter from the server, and correspondingly the server sends the version number of the current communication parameter.

S503: The AP compares a version number of a communication parameter stored on the AP with the version number of the communication parameter stored on the server.

S504: When the AP determines that the version number of the communication parameter stored on the server is greater than the version number of the communication parameter stored on the terminal device, the AP sends a second request message to the server, and correspondingly the server receives the second request message, where the second request message is used to request to obtain a communication parameter of an updated version.

S505: The server sends parameter information of an updated PLMN based on the second request message, and correspondingly, the AP of the terminal device receives the parameter information of the updated PLMN, where the parameter information of the PLMN includes first information, namely, information indicating a 5G networking architecture supported by the PLMN

The server may send the communication parameter of the updated version, and the communication parameter of the updated version includes the parameter information of the updated PLMN

In some implementations, the parameter information of the PLMN may further include other information. For details, refer to related descriptions in FIG. 2 and FIG. 3. Details are not described herein again.

S506: The AP sends the obtained parameter information of the PLMN to the RIL, and correspondingly, the RIL receives the parameter information of the PLMN, where, for example, the parameter information may be transparently transmitted to the RIL.

S507: The RIL determines, based on the 5G networking architecture supported by the terminal device and a 5G networking architecture supported by the PLMN, the parameter information, of the PLMN, pushed to the modem.

For example, if determining that there is an intersection between the 5G networking architecture supported by the terminal device and a 5G networking architecture supported by a first PLMN, the RIL sends 5G parameter information of the first PLMN to the modem. For the modem, only the first PLMN supports 5G, and other PLMNs each do not support 5G. Therefore, the RIL does not need to send 5G parameter information of the another PLMN to the modem. The RIL may send 4G and earlier-generation parameter information of the another PLMN to the modem, or may send 4G and earlier-generation parameter information of the first PLMN. The 5G parameter information of the PLMNs may include a 5G solution indication corresponding to each PLMN, for example, a 5G networking architecture and frequency band information corresponding to 5G.

For example, if the RIL determines that there is no intersection between the 5G networking architecture supported by the terminal device and the 5G networking architecture supported by the PLMN, the RIL does not send any 5G parameter information to the modem. For the modem, all PLMNs support only 4G.

S508: The RIL sends, to the modem, the parameter information, of the PLMN, determined to be stored, and correspondingly, the modem receives the parameter information of the PLMN and locally stores the parameter information of the PLMN, to perform a network search.

In some implementations, the modem may determine a network search policy and a working mode based on 5G parameter information of each PLMN, for example, whether to search for a higher priority PLMN, and working in a 4G mode or a 5G mode.

In some implementations, because a conventional LTE terminal device does not support any 5G architecture, the modem may skip storing any 5G-related parameter information. For the modem, all the PLMNs support only LTE. Therefore, parameter configuration and the network search may be performed according to an LTE processing manner.

In some implementations, for a PLMN that has a 5G networking architecture jointly supported by the PLMN and the terminal device, the RIL may send, to the modem, only 5G parameter information of the PLMN that supports the 5G networking architecture, and does not send 5G parameter information of another PLMN. For the modem, only the PLMN that supports the 5G networking architecture is a 5G network, and other PLMNs each are not the 5G network.

In this embodiment of this application, the RIL of the terminal device may screen the parameter information of the PLMN based on the 5G networking architecture supported by the terminal device and the 5G networking architecture supported by the PLMN, and push, to the modem, the parameter information, of the PLMN, obtained after screening. This reduces redundant storage and improves network search efficiency.

FIG. 6 is a flowchart of a communication method according to another embodiment of this application. In FIG. 6, a modem of a terminal device is configured to: determine, based on a 5G networking architecture supported by the terminal device and a 5G networking architecture supported by a PLMN, parameter information, of the PLMN, stored by the terminal device; and locally store the parameter information of the PLMN. In FIG. 6, an example in which a network device is a server is used for description. However, the server in FIG. 6 may also be replaced with an access point, an access network device, a base station, or another network device. The method in FIG. 6 includes the following steps.

S601 to S605 are the same as or similar to S501 to S505 in FIG. 5. Details are not described herein again.

S606: An AP pushes parameter information of a PLMN to the modem, and correspondingly, the modem receives the parameter information of the PLMN, where the parameter information of the PLMN includes first information, and the first information is used to indicate a 5G networking architecture supported by the PLMN

S607: The modem determines stored parameter information of the PLMN based on the 5G networking architecture supported by the terminal device and the 5G networking architecture supported by the PLMN

For a method for determining, by the modem, the stored parameter information of the PLMN, refer to the foregoing related descriptions, for example, related content in FIG. 3 and FIG. 5. Details are not described herein again.

S608: The modem locally stores the parameter information, of the PLMN, determined in S606, to perform a network search.

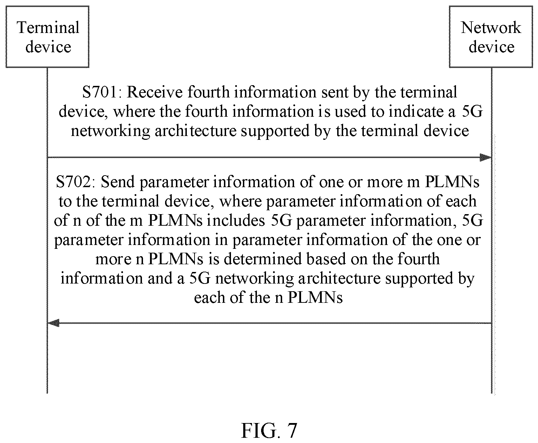

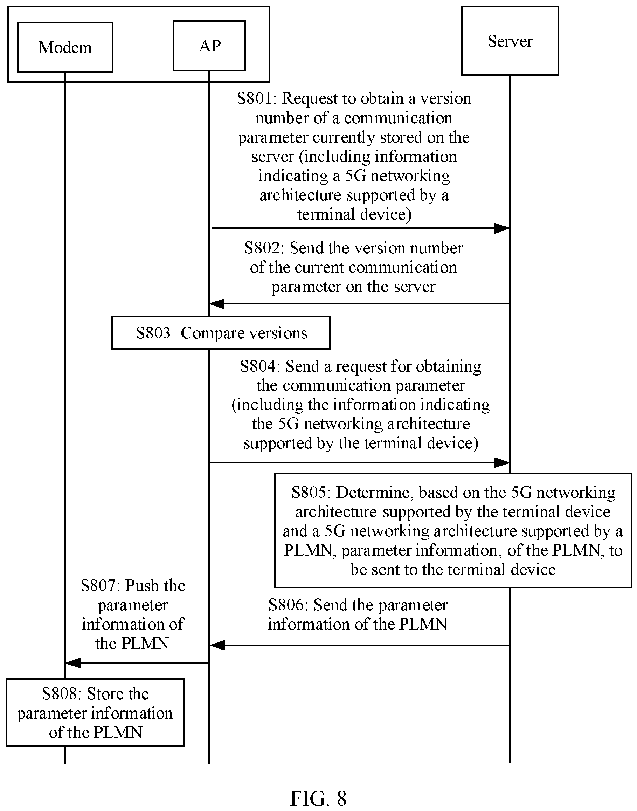

In some implementations, in some embodiments, alternatively, the network device may be responsible for pushing the parameter information of the PLMN to the terminal device after selecting the parameter information of the PLMN based on the 5G networking architecture supported by the terminal device and the 5G networking architecture supported by the PLMN. In other words, the network device may determine, based on different 5G capabilities supported by the terminal device, the parameter information, of the PLMN, to be pushed to the terminal device. The following describes the solution in detail with reference to FIG. 7 and FIG. 8.

FIG. 7 is a schematic flowchart of a communication method according to another embodiment of this application. The method may be performed by a network device and a terminal device, or may be performed by a module disposed in the network device and a module disposed in the terminal device, for example, a processing unit or a chip. As shown in FIG. 7, the method includes the following steps.

S701: The network device receives fourth information sent by the terminal device, and correspondingly, the terminal device sends the fourth information, where the fourth information is used to indicate a 5G networking architecture supported by the terminal device.

S702: The network device sends parameter information of one or more PLMNs to the terminal device, and correspondingly, the terminal device receives the parameter information of the one or more PLMNs, where parameter information of each PLMN includes 5G parameter information, and the parameter information of the one or more PLMNs is determined based on the fourth information and a 5G networking architecture supported by each PLMN

When there is an intersection between a 5G networking architecture supported by a first PLMN and the 5G networking architecture supported by the terminal device, parameter information, of the first PLMN, sent by the network device to the terminal device includes a part of or all of 5G parameter information of the first PLMN

The some 5G parameter information may include only 5G frequency band information corresponding to these intersections (there may be one or more intersections), and may further include information used to indicate these intersections.

In some implementations, before S702, the terminal device may send a request message. The request message is used to request to obtain a communication parameter, and the communication parameter includes parameter information of a PLMN. In S702, the network device may send the communication parameter to the terminal device. The communication parameter includes the parameter information, of the PLMN, determined based on the fourth information and a 5G networking architecture supported by the PLMN

In some implementations, in a specific example, the request message may be used to request to obtain a communication parameter of an updated version. In some implementations, the fourth information may be carried in the request message, or may be carried in a message of another type, or may be separately sent.

For a definition of the parameter information of the PLMN, refer to the foregoing descriptions. Details are not described herein again.

In some implementations, the parameter information, of the PLMN, sent by the network device to the terminal device may include first information. The first information is used to indicate the 5G networking architecture supported by the PLMN

In some implementations, a policy in which the network device determines the parameter information, of the PLMN, to be sent to the terminal device may be the same as or similar to the foregoing policy in which the terminal device determines the stored parameter information of the PLMN. For example, the network device determines the first PLMN from a plurality of PLMNs. There is the intersection between the 5G networking architecture supported by the first PLMN and the 5G networking architecture supported by the terminal device, and the network device may determine to send the 5G parameter information of the first PLMN to the terminal device. The 5G parameter information may include a 5G solution indication corresponding to each of the first PLMN, for example, a 5G networking architecture and frequency band information corresponding to 5G. In other words, the terminal device may perform a network search in a frequency band corresponding to the first PLMN. In some implementations, the first PLMN may be one or more carrier networks.

For the terminal device, only the 5G networking architecture supported by the first PLMN and the 5G networking architecture supported by the terminal device have the intersection. Therefore, for the terminal device, only the first PLMN supports 5G, and other PLMNs each do not support 5G. Therefore, the network device may send the 5G parameter information of the first PLMN to the terminal device, or may send 4G or earlier-generation parameter information of the first PLMN to the terminal device. For another PLMN other than the first PLMN, the network device may send only 4G or earlier-generation parameter information, and does not need to send 5G parameter information.

In some implementations, in a possible implementation, the method further includes: when the network device determines that there is no intersection between a 5G networking architecture supported by a second PLMN and the 5G networking architecture supported by the terminal device, parameter information, of the second PLMN, sent by the network device to the terminal device does not include 5G parameter information of the second PLMN. In other words, the terminal device may not perform a 5G-related network search. Alternatively, in other words, the PLMN parameter information sent by the network device to the terminal device does not include the 5G parameter information.

In this embodiment of this application, the network device may obtain information about the 5G networking architecture supported by the terminal device. The network device determines, based on the information about the 5G networking architecture supported by the terminal device and information about that supported by each PLMN, parameter information, of each PLMN, pushed to the terminal device, so that the terminal device performs a network search by using the parameter information. This reduces redundant storage of the terminal device and improves network search efficiency. For example, 5G parameter information in the pushed parameter information of each PLMN may be optimized. Optimization includes whether to push, and may further include pushing a part of or all of the 5G parameter information.

FIG. 8 is a schematic flowchart of a communication method according to another embodiment of this application. In FIG. 8, an example in which a network device is a server is used for description. However, the server in FIG. 8 may also be replaced with an access point, an access network device, a base station, or another network device. As shown in FIG. 8, the method includes the following steps.

S801: An AP sends a first request message to the server, and correspondingly the server receives the first request message, where the first request message is used to request to obtain a version number of a communication parameter currently stored on the server, and the communication parameter includes parameter information of a PLMN

In some implementations, the first request message may include fourth information, and the fourth information is used to indicate a 5G networking architecture supported by a terminal device. In some implementations, the first request message may alternatively carry information about another 5G capability of the terminal device.

In an example, the first request message may be used to request to obtain a version number of a 5G-related communication parameter currently stored on the server.

S802: The AP receives the version number of the current communication parameter from the server, and correspondingly the server sends the version number of the current communication parameter.

S803: The AP compares a version number of a communication parameter stored on the AP with the version number of the communication parameter stored on the server.

S804: When the AP determines that the version number of the communication parameter stored on the server is greater than the version number of the communication parameter stored on the terminal device, the AP sends a second request message to the server, and correspondingly the server receives the second request message, where the second request message is used to request to obtain a communication parameter of an updated version.

In some implementations, the second request message may also carry the fourth information, and the fourth information is used to indicate the 5G networking architecture supported by the terminal device.

S805: The server determines, based on the 5G networking architecture supported by the terminal device and a 5G networking architecture supported by the PLMN, the parameter information, of the PLMN, to be sent to the terminal device.

For example, if determining that there is an intersection between the 5G networking architecture supported by the terminal device and a 5G networking architecture supported by a first PLMN, the server sends 5G parameter information of the first PLMN to the terminal device. For the terminal device, only the first PLMN supports 5G, and other PLMNs each do not support 5G. Therefore, the server does not need to send 5G parameter information of another PLMN to the terminal device. The server may send 4G and earlier-generation parameter information of the another PLMN to the terminal device, or may send 4G and earlier-generation parameter information of the first PLMN The 5G parameter information of the PLMNs may include a 5G solution indication corresponding to each PLMN, for example, a 5G networking architecture and frequency band information corresponding to 5G.

If the server determines that there is no intersection between the 5G networking architecture supported by the terminal device and the 5G networking architecture supported by the PLMN, the server does not send any 5G parameter information to the terminal device. For the terminal device, all PLMNs support only 4G.

S806: The server sends the parameter information, of the PLMN, determined in S805 to the terminal device, and correspondingly, the AP of the terminal device receives the parameter information of the PLMN

The server may send the communication parameter, and the communication parameter includes the determined parameter information of the PLMN

In some implementations, the parameter information of the PLMN includes first information, namely, information indicating the 5G networking architecture supported by the PLMN

S806: The AP of the terminal device sends the obtained parameter information of the PLMN to a modem, and correspondingly, the modem receives the parameter information of the PLMN

S807: The modem locally stores the parameter information of the PLMN to perform a network search.

In this embodiment of this application, the server may obtain information about the 5G networking architecture supported by the terminal device. The server determines, based on the information about the 5G networking architecture supported by the terminal device and information about that supported by the PLMN, the parameter information, of the PLMN, pushed to the terminal device, so that the terminal device performs the network search by using the parameter information. This reduces redundant storage of the terminal device and improves network search efficiency.

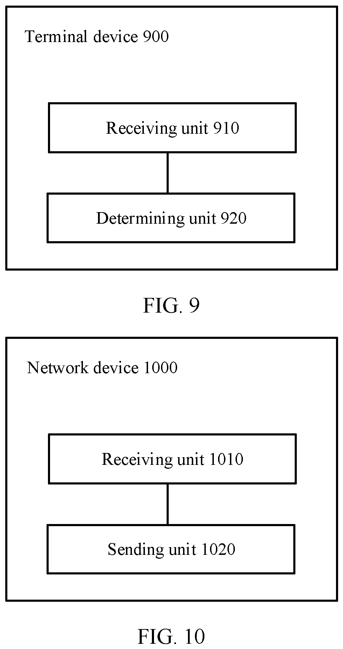

The foregoing describes the communication method in the embodiments of this application with reference to FIG. 1 to FIG. 8. The following describes an apparatus in the embodiments of this application with reference to FIG. 9 to FIG. 12.

FIG. 9 is a schematic block diagram of a terminal device 900 according to an embodiment of this application. The terminal device 900 can perform steps performed by the terminal device in the method embodiments of this application. To avoid repetition, details are not described herein again. The terminal device 900 includes a receiving unit 910 and a determining unit 920.

The receiving unit 910 is configured to receive parameter information of m public land mobile networks PLMNs. Parameter information of each of the m PLMNs includes 5G parameter information, each piece of 5G parameter information includes first information, and the first information is used to indicate a fifth generation 5G mobile communications system networking architecture supported by each PLMN. The determining unit 920 is configured to: determine, based on the first information of each PLMN and a 5G networking architecture supported by the terminal device, 5G parameter information of n PLMNs that needs to be stored by the terminal device, where both m and n are integers, m is greater than or equal to 1, and m is greater than or equal to n.

FIG. 10 is a schematic block diagram of a network device 1000 according to an embodiment of this application. The network device 1000 can perform steps performed by the network device or the server in the method embodiments of this application. To avoid repetition, details are not described herein again. The network device 1000 includes a receiving unit 1010 and a sending unit 1020.

The receiving unit 1010 is configured to receive a request message sent by a terminal device. The request message is used to request to obtain parameter information of one or more PLMNs. The sending unit 1020 is configured to send the parameter information of the one or more PLMNs to the terminal device. Parameter information of each PLMN includes first information, and the first information is used to indicate a fifth generation 5G mobile communications system networking architecture supported by each PLMN

Alternatively, the receiving unit 1010 is configured to receive fourth information sent by the terminal device. The fourth information is used to indicate a 5G networking architecture supported by the terminal device. The sending unit 1020 is configured to: send parameter information of m PLMNs to the terminal device, where parameter information of each of n of the m PLMNs includes 5G parameter information, 5G parameter information in parameter information of the n PLMNs is determined based on the fourth information and a 5G networking architecture supported by each of the n PLMNs, both m and n are integers, m is greater than or equal to 1, and m is greater than or equal to n.

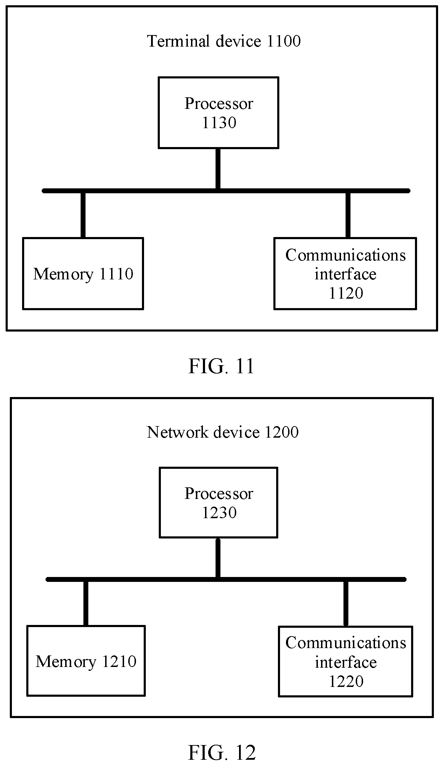

FIG. 11 is a schematic block diagram of a terminal device 1100 according to an embodiment of this application. The terminal device 1100 may perform the steps performed by the terminal device in the method embodiments of this application. To avoid repetition, details are not described herein again. The terminal device 1100 includes a memory 1110, a communications interface 1120, and a processor 1130.

The memory 1110 (there may be one or more memories) is configured to store a program.

The communications interface 1120 is configured to communicate with another device.

The processor 1130 (there may be one or more processors) is configured to execute the program in the memory 1110. When the program is executed, the processor 1130 is configured to receive parameter information of m public land mobile networks PLMNs by using the communications interface 1120. Parameter information of each of the m PLMNs includes 5G parameter information, each piece of 5G parameter information includes first information, and the first information is used to indicate a fifth generation 5G mobile communications system networking architecture supported by each PLMN. The processor 1130 is further configured to: determine, based on the first information of each PLMN and a 5G networking architecture supported by the terminal device, 5G parameter information of n PLMNs that needs to be stored by the terminal device, where both m and n are integers, m is greater than or equal to 1, and m is greater than or equal to n.

FIG. 12 is a schematic block diagram of a network device 1200 according to an embodiment of this application. It should be understood that the network device 1200 can perform steps performed by the network device or the server in the method embodiments of this application. To avoid repetition, details are not described herein again. The network device 1200 includes a memory 1210, a communications interface 1220, and a processor 1230.

The memory 1210 (there may be one or more memories) is configured to store a program.

The communications interface 1220 is configured to communicate with another device.

The processor 1230 (there may be one or more processors) is configured to execute the program in the memory 1210. When the program is executed, the processor 1230 is configured to receive, by using the communications interface 1220, a request message sent by a terminal device. The request message is used to request to obtain parameter information of one or more PLMNs. The processor 1230 is further configured to send the parameter information of the one or more PLMNs to the terminal device by using the communications interface 1220. Parameter information of each PLMN includes first information, and the first information is used to indicate a fifth generation 5G mobile communications system networking architecture supported by each PLMN

Alternatively, the processor 1230 is configured to receive, by using the communications interface 1220, fourth information sent by the terminal device. The fourth information is used to indicate a 5G networking architecture supported by the terminal device. The processor 1230 is further configured to: send parameter information of m PLMNs to the terminal device by using the communications interface 1220, where parameter information of each of n of the m PLMNs includes 5G parameter information, 5G parameter information in parameter information of the n PLMNs is determined based on the fourth information and a 5G networking architecture supported by each of the n PLMNs, both m and n are integers, m is greater than or equal to 1, and m is greater than or equal to n.

Embodiments provided in this application further include any one of the following:
1. An information storage method, including:
   receiving, by user equipment UE, first 5G information sent by a network side device, where the first 5G information includes first indication information, and the first indication information is used to indicate a 5G networking architecture supported by a first PLMN; and
   determining, by the UE, second 5G information based on a 5G networking architecture supported by the UE and the first 5G information, and storing the second 5G information, where the second 5G information includes the determined 5G networking architecture that is supported by the first PLMN and that should be stored by the UE.
2. The method according to Embodiment 1, where that the first 5G information includes the 5G networking architecture supported by the first PLMN includes:
   determining, by the UE based on radio access technology RAT information in the first 5G information, the 5G networking architecture supported by the first PLMN; or
   determining, by the UE based on the information that is in the first 5G information and that is used to indicate the 5G networking architecture supported by the PLMN, the 5G networking architecture supported by the first PLMN
3. The method according to Embodiment 1 or 2, where the determining and storing second 5G information includes:
   the second 5G information includes an intersection between the 5G networking architecture supported by the UE and the 5G networking architecture supported by the first PLMN
4. The method according to any one of Embodiments 1 to 3, where the determining and storing second 5G information further includes:
   when the UE is determined to be in a roaming state, and when there is the first PLMN, in a country in which the UE is currently located, matching the 5G networking architecture supported by the UE, if the first PLMN is campable, camping, by the UE, on the first PLMN; or
   if the first PLMN is not campable, after camping on a second PLMN, further attempting, by the UE, to camp on the first PLMN.
5. The method according to any one of Embodiments 1 to 3, further including:
   when the UE is determined to be in a roaming state, and when there is no PLMN, in a country in which the UE is currently located, matching the 5G networking architecture supported by the UE, disabling, by the UE, a 5G-related function.
6. The method according to any one of Embodiments 1 to 5, further including:
   when the 5G networking architecture supported by the first PLMN includes only one of 5G networking architectures supported by the UE, performing, by the UE, processing based on only the 5G networking architecture supported by the UE and the 5G networking architecture supported by the PLMN; or
   when there are at least two intersections between the 5G networking architecture supported by the first PLMN and the 5G networking architecture supported by the UE, determining, by the UE according to a carrier policy and a local policy, a 5G networking architecture on which the UE preferably camps.
7. A terminal, where the terminal includes:
   a memory, configured to store an instruction; and
   a processor, configured to invoke and execute the instruction in the memory, so that the terminal is enabled to perform the method according to any one of Embodiments 1 to 6.
8. A terminal, where the terminal includes a processor, a memory, and a transceiver, where
   the transceiver is configured to send and receive data;
   the memory is configured to store an instruction; and
   the processor is configured to invoke and execute the instruction in the memory, so that the terminal is enabled to perform the method according to any one of Embodiments 1 to 6.
9. A terminal, where the terminal is configured to perform the method according to any one of Embodiments 1 to 6.
10. A computer program product, including a computer program, where when the computer program is executed on a computer, the computer implements the method according to any one of Embodiments 1 to 6.
11. A computer-readable storage medium, where a computer program is stored in the computer-readable storage medium, and when the computer program is executed on a computer, the computer implements the method according to any one of Embodiments 1 to 6.
12. An apparatus, applied to a terminal device, where the apparatus is coupled to a memory, and is configured to read and execute an instruction stored in the memory, so that the terminal device is enabled to implement the method according to any one of Embodiments 1 to 6; and
   the memory may be integrated into the processor, or may be independent of the processor.
13. The apparatus according to Embodiment 12, where the apparatus is a chip or a system on chip.

It may be understood that the terminal device, the network device, and/or the server may perform some or all of the steps in the foregoing embodiments. These steps or operations are merely examples. In the embodiments of this application, another operation or variations of various operations may further be performed. In addition, the steps may be performed in a sequence different from that presented in the foregoing embodiments, and possibly, not all operations in the foregoing embodiments need to be performed.

A person of ordinary skill in the art may be aware that, in combination with the examples described in the embodiments disclosed in this application, units and algorithm steps may be implemented by electronic hardware or a combination of computer software and electronic hardware. Whether the functions are performed by hardware or software depends on particular applications and design constraint conditions of the technical solutions. A person skilled in the art may use a different method to implement the described functions for each particular application, but it should not be considered that the implementation goes beyond the scope of this application.

It may be clearly understood by a person skilled in the art that, for convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in another manner. For example, the described apparatus embodiment is merely an example. For example, division into the modules or units is merely logical function division and may be other division in an actual implementation. For example, a plurality of units or components may be combined or integrated into another system, or some features may be ignored or not performed. In addition, the displayed or discussed mutual coupling or a direct coupling or a communication connection may be implemented by using some interfaces. An indirect coupling or a communication connection between the apparatuses or units may be implemented in an electronic form, a mechanical form, or in another form.

The units described as separate parts may or may not be physically separate, and parts displayed as units may or may not be physical units, may be located in one position, or may be distributed on a plurality of network units. A part of or all of the units may be selected based on an actual requirement to achieve the objectives of the solutions in the embodiments.

In addition, functional units in the embodiments of this application may be integrated into one processing unit, or each of the units may exist alone physically, or two or more units are integrated into one unit.

When the functions are implemented in a form of a software function unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in the embodiments of this application. The foregoing storage medium includes various media that may store program code, such as a USB flash drive, a removable hard disk, a read-only memory (read-only memory, ROM), a random access memory (random access memory, RAM), a magnetic disk, and an optical disc.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving, by a terminal device, parameter information of m public land mobile networks PLMNs, wherein parameter information of each of the m PLMNs comprises 5G parameter information, each piece of 5G parameter information comprises first information, and the first information is used to indicate a fifth generation 5G mobile communications system networking architecture supported by each PLMN; and
determining, by the terminal device based on the first information of each PLMN and a 5G networking architecture supported by the terminal device, 5G parameter information of n PLMNs that needs to be stored by the terminal device, wherein both m and n are integers, m is greater than or equal to 1, and m is greater than or equal to n.

2. The method according to claim 1, wherein the determining, by the terminal device based on the first information of each PLMN and a 5G networking architecture supported by the terminal device, 5G parameter information of n PLMNs that needs to be stored by the terminal device comprises:
when there is an intersection between a 5G networking architecture supported by a first PLMN and the 5G networking architecture supported by the terminal device, storing, by the terminal device, 5G parameter information of the first PLMN

3. The method according to claim 2, wherein the storing, by the terminal device, 5G parameter information of the first PLMN comprises: storing, by the terminal device, the 5G parameter information of the first PLMN into a modem of the terminal device.

4. The method according to claim 2 or 3, wherein the 5G parameter information, of the first PLMN, stored by the terminal device comprises second information, the second information is used to indicate the 5G networking architecture supported by the first PLMN, and the 5G networking architecture that is supported by the first PLMN and that is indicated by the second information comprises only the intersection between the 5G networking architecture supported by the first PLMN and the 5G networking architecture supported by the terminal device.

5. The method according to claim 4, wherein the 5G parameter information, of the first PLMN, stored by the terminal device comprises third information, and the third information is used to indicate 5G frequency band information corresponding to the second information.

6. The method according to claim 1, wherein the determining, by the terminal device based on the first information of each PLMN and a 5G networking architecture supported by the terminal device, 5G parameter information of n PLMNs that needs to be stored by the terminal device comprises:
determining, by the terminal device based on the first information of a second PLMN, that there is no intersection between a 5G networking architecture supported by the second PLMN and the 5G networking architecture supported by the terminal device; and
skipping storing, by the terminal device, 5G parameter information of the second PLMN.

7. The method according to any one of claims 1 to 6, wherein the 5G networking architecture supported by each PLMN is implicitly indicated by using a radio access technology RAT information field.

8. The method according to any one of claims 1 to 7, wherein the method further comprises:
when the terminal device is in a roaming state, determining, by the terminal device based on the stored 5G parameter information of the PLMN, one or more third PLMNs from PLMNs in a country or a region in which the terminal device is currently located, wherein there is an intersection between a 5G networking architecture supported by each third PLMN and the 5G networking architecture supported by the terminal device; and
when there is a campable PLMN in the one or more third PLMNs, camping, by the terminal device, on the campable PLMN in the one or more third PLMNs.

9. The method according to claim 8, wherein the method further comprises:
when none of the one or more third PLMNs are campable, camping, by the terminal device, on another PLMN other than the one or more third PLMNs based on a configuration of a fourth generation 4G mobile communications system.

10. The method according to any one of claims 1 to 7, wherein the method further comprises:
when the terminal device is in a roaming state, if the terminal device determines, based on the stored 5G parameter information of the n PLMNs, that there is no intersection between 5G networking architectures supported by all PLMNs in a country or a region in which the terminal device is currently located and the 5G networking architecture supported by the terminal device, disabling, by the terminal device, a 5G function of the terminal device.

11. The method according to any one of claims 1 to 10, wherein the method further comprises:
when one PLMN and the terminal device jointly support at least two 5G networking architectures, determining, by the terminal device according to a carrier policy and/or a local policy, a 5G networking architecture on which the terminal device preferably attempts to camp.

12. The method according to any one of claims 1 to 11, wherein the receiving, by a terminal device, parameter information of m PLMNs comprises:
receiving, by an application processor AP of the terminal device, the parameter information of the m PLMNs; and
the determining, by the terminal device based on the first information of each PLMN and a 5G networking architecture supported by the terminal device, 5G parameter information of n PLMNs that needs to be stored by the terminal device comprises:
sending, by the AP, the parameter information of the m PLMNs to a radio interface layer RIL of the terminal device;
determining, by the RIL based on the first information comprised in the parameter information of the m PLMNs and the 5G networking architecture supported by the terminal device, the 5G parameter information of the n PLMNs that needs to be stored by the terminal device; and
sending, by the RIL, the 5G parameter information of the n PLMNs to the modem of the terminal device.

13. The method according to any one of claims 1 to 11, wherein the receiving, by a terminal device, parameter information of m PLMNs comprises:
receiving, by an application processor AP of the terminal device, the parameter information of the m PLMNs; and
the determining, by the terminal device based on the first information of each PLMN and a 5G networking architecture supported by the terminal device, 5G parameter information of n PLMNs that needs to be stored by the terminal device comprises:
sending, by the AP, the parameter information of the m PLMNs to the modem of the terminal device; and
determining, by the modem based on the first information comprised in the parameter information of the m PLMNs and the 5G networking architecture supported by the terminal device, the 5G parameter information of the n PLMNs that needs to be stored by the terminal device.

14. A communication method, comprising:
receiving, by a network device, a request message sent by a terminal device, wherein the request message is used to request to obtain parameter information of one or more public land mobile networks PLMNs; and
sending, by the network device, the parameter information of the one or more PLMNs to the terminal device, wherein parameter information of each PLMN comprises first information, and the first information is used to indicate a fifth generation 5G mobile communications system networking architecture supported by each PLMN

15. A communication method, comprising:
receiving, by a network device, fourth information sent by a terminal device, wherein the fourth information is used to indicate a 5G networking architecture supported by the terminal device; and
sending, by the network device, parameter information of m PLMNs to the terminal device, wherein parameter information of each of n of the m PLMNs comprises 5G parameter information, 5G parameter information in parameter information of the n PLMNs is determined based on the fourth information and a 5G networking architecture supported by each of the n PLMNs, both m and n are integers, m is greater than or equal to 1, and m is greater than or equal to n.

16. The method according to claim 15, wherein when there is an intersection between a 5G networking architecture supported by a first PLMN and the 5G networking architecture supported by the terminal device, parameter information, of the first PLMN, sent by the network device to the terminal device comprises a part of or all of 5G parameter information of the first PLMN

17. The method according to claim 15, wherein when there is no intersection between a 5G networking architecture supported by a second PLMN and the 5G networking architecture supported by the terminal device, parameter information, of the second PLMN, sent by the network device to the terminal device does not comprise 5G parameter information of the second PLMN.

18. A terminal device, comprising:
a receiving unit, configured to receive parameter information of m public land mobile networks PLMNs, wherein parameter information of each of the m PLMNs comprises 5G parameter information, each piece of 5G parameter information comprises first information, and the first information is used to indicate a fifth generation 5G mobile communications system networking architecture supported by each PLMN; and
a determining unit, configured to determine, based on the first information of each PLMN and a 5G networking architecture supported by the terminal device, 5G parameter information of n PLMNs that needs to be stored by the terminal device, wherein both m and n are integers, m is greater than or equal to 1, and m is greater than or equal to n.

19. The terminal device according to claim 18, wherein the determining unit is specifically configured to: when there is an intersection between a 5G networking architecture supported by a first PLMN and the 5G networking architecture supported by the terminal device, store 5G parameter information of the first PLMN

20. The terminal device according to claim 19, wherein the 5G parameter information, of the first PLMN, stored by the determining unit comprises second information, the second information is used to indicate the 5G networking architecture supported by the first PLMN, and the 5G networking architecture that is supported by the first PLMN and that is indicated by the second information comprises only the intersection between the 5G networking architecture supported by the first PLMN and the 5G networking architecture supported by the terminal device.

21. The terminal device according to claim 20, wherein the 5G parameter information, of the first PLMN, stored by the determining unit comprises third information, and the third information is used to indicate 5G frequency band information corresponding to the second information.

22. The terminal device according to claim 18, wherein the determining unit is specifically configured to: if determining, based on the first information of a second PLMN, that there is no intersection between a 5G networking architecture supported by the second PLMN and the 5G networking architecture supported by the terminal device, skip storing 5G parameter information of the second PLMN

23. The terminal device according to any one of claims 18 to 22, wherein the 5G networking architecture supported by each PLMN is implicitly indicated by using a radio access technology RAT information field.

24. The terminal device according to any one of claims 18 to 23, wherein the determining unit is further configured to: when the terminal device is in a roaming state, determine, based on the stored 5G parameter information of the PLMN, one or more third PLMNs from PLMNs in a country or a region in which the terminal device is currently located, wherein there is an intersection between a 5G networking architecture supported by each third PLMN and the 5G networking architecture supported by the terminal device; and when there is a campable PLMN in the one or more third PLMNs, determine that the terminal device camps on the campable PLMN in the one or more third PLMNs.

25. The terminal device according to claim 24, wherein the determining unit is further configured to: when none of the one or more third PLMNs are campable, determine that the terminal device camps on another PLMN other than the one or more third PLMNs based on a configuration of a fourth generation 4G mobile communications system.

26. The terminal device according to any one of claims 18 to 25, wherein the determining unit is further configured to: when the terminal device is in the roaming state, if determining, based on the stored 5G parameter information of the n PLMNs, that there is no intersection between 5G networking architectures supported by all PLMNs in the country or the region in which the terminal device is currently located and the 5G networking architecture supported by the terminal device, disable a 5G function of the terminal device.

27. The terminal device according to any one of claims 18 to 26, wherein the determining unit is further configured to: when one PLMN and the terminal device jointly support at least two 5G networking architectures, determine, according to a carrier policy and/or a local policy, a 5G networking architecture on which the terminal device preferably attempts to camp.

28. A network device, comprising:
a receiving unit, configured to receive a request message sent by a terminal device, wherein the request message is used to request to obtain parameter information of one or more public land mobile networks PLMNs; and
a sending unit, configured to send the parameter information of the one or more PLMNs to the terminal device, wherein parameter information of each PLMN comprises first information, and the first information is used to indicate a fifth generation 5G mobile communications system networking architecture supported by each PLMN

29. A network device, comprising:
a receiving unit, configured to receive fourth information sent by a terminal device, wherein the fourth information is used to indicate a 5G networking architecture supported by the terminal device; and
a sending unit, configured to send parameter information of m PLMNs to the terminal device, wherein parameter information of each of n of the m PLMNs comprises 5G parameter information, 5G parameter information in parameter information of the n PLMNs is determined based on the fourth information and a 5G networking architecture supported by each of the n PLMNs, both m and n are integers, m is greater than or equal to 1, and m is greater than or equal to n.

30. The network device according to claim 29, wherein when there is an intersection between a 5G networking architecture supported by a first PLMN and the 5G networking architecture supported by the terminal device, parameter information, of the first PLMN, sent to the terminal device comprises a part of or all of 5G parameter information of the first PLMN

31. The network device according to claim 29, wherein when there is no intersection between a 5G networking architecture supported by a second PLMN and the 5G networking architecture supported by the terminal device, parameter information, of the second PLMN, sent by the network device to the terminal device does not comprise 5G parameter information of the second PLMN

32. A terminal device, comprising:
a communications interface;
a memory, configured to store an instruction; and
a processor, separately connected to the memory and the communications interface, configured to execute the instruction stored in the memory, to perform the following steps when the instruction is executed:
receiving parameter information of m public land mobile networks PLMNs by using the communications interface, wherein parameter information of each of the m PLMNs comprises 5G parameter information, each piece of 5G parameter information comprises first information, and the first information is used to indicate a fifth generation 5G mobile communications system networking architecture supported by each PLMN; and
determining, based on the first information of each PLMN and a 5G networking architecture supported by the terminal device, 5G parameter information of n PLMNs that needs to be stored by the terminal device, wherein both m and n are integers, m is greater than or equal to 1, and m is greater than or equal to n.

33. The terminal device according to claim 32, wherein the processor is specifically configured to: when there is an intersection between a 5G networking architecture supported by a first PLMN and the 5G networking architecture supported by the terminal device, store 5G parameter information of the first PLMN

34. The terminal device according to claim 33, wherein the 5G parameter information, of the first PLMN, stored by the processor comprises second information, the second information is used to indicate the 5G networking architecture supported by the first PLMN, and the 5G networking architecture that is supported by the first PLMN and that is indicated by the second information comprises only the intersection between the 5G networking architecture supported by the first PLMN and the 5G networking architecture supported by the terminal device.

35. The terminal device according to claim 34, wherein the 5G parameter information, of the first PLMN, stored by the processor comprises third information, and the third information is used to indicate 5G frequency band information corresponding to the second information.

36. The terminal device according to claim 32, wherein the processor is specifically configured to: determine, based on the first information of a second PLMN, that there is no intersection between a 5G networking architecture supported by the second PLMN and the 5G networking architecture supported by the terminal device; and skip storing 5G parameter information of the second PLMN

37. The terminal device according to any one of claims 32 to 36, wherein the 5G networking architecture supported by each PLMN is implicitly indicated by using a radio access technology RAT information field.

38. The terminal device according to any one of claims 32 to 37, wherein when the terminal device is in a roaming state, the processor is further configured to: determine, based on the stored 5G parameter information of the PLMN, one or more third PLMNs from PLMNs in a country or a region in which the terminal device is currently located, wherein there is an intersection between a 5G networking architecture supported by each third PLMN and the 5G networking architecture supported by the terminal device; and when there is a campable PLMN in the one or more third PLMNs, determine that the terminal device camps on the campable PLMN in the one or more third PLMNs.

39. The terminal device according to claim 38, wherein the processor is further configured to: when none of the one or more third PLMNs are campable, determine that the terminal device camps on another PLMN other than the one or more third PLMNs based on a configuration of a fourth generation 4G mobile communications system.

40. The terminal device according to any one of claims 32 to 39, wherein when the terminal device is in the roaming state, the processor is further configured to: determine, based on the stored 5G parameter information of the n PLMNs, that there is no intersection between 5G networking architectures supported by all PLMNs in the country or the region in which the terminal device is currently located and the 5G networking architecture supported by the terminal device; and disable a 5G function of the terminal device.

41. The terminal device according to any one of claims 32 to 40, wherein the processor is further configured to: when one PLMN and the terminal device jointly support at least two 5G networking architectures, determine, according to a carrier policy and/or a local policy, a 5G networking architecture on which the terminal device preferably attempts to camp.

42. A network device, comprising:
a communications interface;
a memory, configured to store an instruction; and
a processor, separately connected to the memory and the communications interface, configured to execute the instruction stored in the memory, to perform the following steps when the instruction is executed:
receiving, by using the communications interface, a request message sent by a terminal device, wherein the request message is used to request to obtain parameter information of one or more public land mobile networks PLMNs; and
sending the parameter information of the one or more PLMNs to the terminal device by using the communications interface, wherein parameter information of each PLMN comprises first information, and the first information is used to indicate a fifth generation 5G mobile communications system networking architecture supported by each PLMN

43. A network device, comprising:
a communications interface;
a memory, configured to store an instruction; and
a processor, separately connected to the memory and the communications interface, configured to execute the instruction stored in the memory, to perform the following steps when the instruction is executed:
receiving, by using the communications interface, fourth information sent by a terminal device, wherein the fourth information is used to indicate a 5G networking architecture supported by the terminal device; and
sending parameter information of one or more PLMNs to the terminal device by using the communications interface, wherein parameter information of each PLMN comprises 5G parameter information, and the parameter information of the one or more PLMNs is determined based on the fourth information and a 5G networking architecture supported by each PLMN

44. The network device according to claim 43, wherein when there is an intersection between a 5G networking architecture supported by a first PLMN and the 5G networking architecture supported by the terminal device, parameter information, of the first PLMN, sent to the terminal device comprises a part of or all of 5G parameter information of the first PLMN

45. The network device according to claim 43, wherein when there is no intersection between a 5G networking architecture supported by a second PLMN and the 5G networking architecture supported by the terminal device, parameter information, of the second PLMN, sent by the network device to the terminal device does not comprise 5G parameter information of the second PLMN

46. A terminal device, comprising an application processor AP, a radio interface layer RIL, a modem, and a transceiver, wherein
the AP is configured to: receive parameter information of m public land mobile networks PLMNs by using the transceiver, wherein parameter information of each of the m PLMNs comprises 5G parameter information, each piece of 5G parameter information comprises first information, and the first information is used to indicate a fifth generation 5G mobile communications system networking architecture supported by each PLMN;
the AP is further configured to send the parameter information of the m PLMNs to the RIL;
the RIL is configured to: determine, based on the first information in the parameter information of the m PLMNs and a 5G networking architecture supported by the terminal device, 5G parameter information of n PLMNs that needs to be stored by the terminal device, wherein both m and n are integers, m is greater than or equal to 1, and m is greater than or equal to n;
the RIL sends parameter information of the n PLMNs to the modem; and
the modem is configured to store the parameter information of the n PLMNs.

47. The terminal device according to claim 46, wherein the RIL is specifically configured to: when there is an intersection between a 5G networking architecture supported by a first PLMN and the 5G networking architecture supported by the terminal device, determine to store 5G parameter information of the first PLMN

48. The method according to claim 47, wherein the RIL is specifically configured to send the 5G parameter information of the first PLMN to the modem; and
the modem is specifically configured to store the 5G parameter information of the first PLMN

49. The terminal device according to claim 47 or 48, wherein the 5G parameter information of the first PLMN comprises second information, the second information is used to indicate the 5G networking architecture supported by the first PLMN, and the 5G networking architecture that is supported by the first PLMN and that is indicated by the second information comprises only the intersection between the 5G networking architecture supported by the first PLMN and the 5G networking architecture supported by the terminal device.

50. The terminal device according to claim 49, wherein the 5G parameter information of the first PLMN comprises third information, and the third information is used to indicate 5G frequency band information corresponding to the second information.

51. The terminal device according to claim 46, wherein the RIL is specifically configured to: determine, based on the first information of a second PLMN, that there is no intersection between a 5G networking architecture supported by the second PLMN and the 5G networking architecture supported by the terminal device; and determine to skip storing 5G parameter information of the second PLMN

52. A terminal device, comprising an application processor AP, a modem, and a transceiver, wherein
the AP is configured to: receive parameter information of m public land mobile networks PLMNs by using the transceiver, wherein parameter information of each of the m PLMNs comprises 5G parameter information, each piece of 5G parameter information comprises first information, and the first information is used to indicate a fifth generation 5G mobile communications system networking architecture supported by each PLMN;
the AP is further configured to send the parameter information of the m PLMNs to the modem;
the modem is configured to: determine, based on the first information in the parameter information of the m PLMNs and a 5G networking architecture supported by the terminal device, 5G parameter information of n PLMNs that needs to be stored by the terminal device, wherein both m and n are integers, m is greater than or equal to 1, and m is greater than or equal to n; and
the modem is further configured to store parameter information of the n PLMNs.

53. The terminal device according to claim 52, wherein the modem is specifically configured to: when there is an intersection between a 5G networking architecture supported by a first PLMN and the 5G networking architecture supported by the terminal device, determine to store 5G parameter information of the first PLMN

54. The terminal device according to claim 53, wherein the modem specifically stores the 5G parameter information of the first PLMN

55. The terminal device according to claim 53 or 54, wherein the 5G parameter information of the first PLMN comprises second information, the second information is used to indicate the 5G networking architecture supported by the first PLMN, and the 5G networking architecture that is supported by the first PLMN and that is indicated by the second information comprises only the intersection between the 5G networking architecture supported by the first PLMN and the 5G networking architecture supported by the terminal device.

56. The terminal device according to claim 55, wherein the 5G parameter information of the first PLMN comprises third information, and the third information is used to indicate 5G frequency band information corresponding to the second information.

57. The terminal device according to claim 52, wherein the modem is specifically configured to: determine, based on the first information of a second PLMN, that there is no intersection between a 5G networking architecture supported by the second PLMN and the 5G networking architecture supported by the terminal device; and determine to skip storing 5G parameter information of the second PLMN

58. A computer program product, comprising a computer program, wherein when the computer program is executed on a computer, the computer implements the method according to any one of claims 1 to 13.

59. A computer program product, comprising a computer program, wherein when the computer program is executed on a computer, the computer implements the method according to claim 14.

60. A computer program product, comprising a computer program, wherein when the computer program is executed on a computer, the computer implements the method according to any one of claims 15 to 17.

61. A computer-readable storage medium, wherein the computer-readable storage medium stores a computer program, and when the computer program is executed on a computer, the computer implements the method according to any one of claims 1 to 13.

62. A computer-readable storage medium, wherein the computer-readable storage medium stores a computer program, and when the computer program is executed on a computer, the computer implements the method according to claim 14.

63. A computer-readable storage medium, wherein the computer-readable storage medium stores a computer program, and when the computer program is executed on a computer, the computer implements the method according to any one of claims 15 to 17.

64. An apparatus, applied to a terminal device, wherein the apparatus is coupled to a memory, and is configured to read and execute an instruction stored in the memory, so that the terminal device is enabled to implement the method according to any one of claims 1 to 13.

65. An apparatus, applied to a network device, wherein the apparatus is coupled to a memory, and is configured to read and execute an instruction stored in the memory, so that the network device is enabled to implement the method according to claim 14.

66. An apparatus, applied to a network device, wherein the apparatus is coupled to a memory, and is configured to read and execute an instruction stored in the memory, so that the network device is enabled to implement the method according to any one of claims 15 to 17.
